# FASCICULE DE BREVET EUROPEEN

(11) **EP 2 655 523 B1**
(45) Date de publication et mention de la délivrance du brevet: **27.05.2015**
(21) Numéro de dépôt: 11802422.3
(22) Date de dépôt: 21.12.2011
(51) Int. Cl.: B05D 5/08, B05D 7/22, B05D 1/18, B82Y 30/00, B82Y 40/00, C09D 7/12, C23F 11/10, C23C 22/03, C23F 11/16, C09D 5/08, C09D 5/16, C08L 71/02, C09D 171/02, C10M 105/72, C23F 11/167, C10M 105/74

(54) **COMPOSITION HYDROPHOBE ET LIPOPHOBE COMPRENANT DES COMPOSÉS AYANT UN GROUPE BISPHOSPHONIQUE ET THIOL**
LIPOPHOBE UND HYDROPHOBE ZUSAMMENSETZUNG ENTHALTEND KOMPONENTEN MIT EINER DIPHOSPHON- UND THIOL-GRUPPE
HYDROPHILIC AND LIPOPHOBIC COMPOSITION COMPRISING COMPONENTS HAVING A DISPHOSPHONIC AND A THIOL GROUP

(30) Priorité: 23.12.2010 FR 1061202
(43) Date de publication de la demande: 30.10.2013
(73) Titulaire: Surfactis Technologies, 49100 Angers (FR)
(72) Inventeur: PORTET, David, F-49125 Briollay (FR); LECOLLINET, Gregory, F-49330 Juvardeil (FR)
(74) Mandataire: Regimbeau
(86) Numéro de dépôt international: PCT/EP2011/073661
(87) Numéro de publication internationale: WO 2012/085134

(56) Documents cités:
- EP-A2- 0 861 846
- WO-A1-2006/084879
- WO-A2-2007/112312
- US-A1- 2005 048 288

## Description

La présente invention décrit les propriétés hautement avantageuses d'un mélange de molécules thiols-perfluoropolyéther (PFPE) avec des composés bisphosphoniques perfluorés (BP-PF). Ce mélange permet en effet d'obtenir un comportement lipophobe et hydrophobe sur de nombreux matériaux, incluant les métaux, entre autre l'or et ses alliages. Il permet de prévenir la corrosion, et de limiter le dépôt de salissure et la contamination microbiologique sur ces surfaces, tout en conférant une bonne résistance mécanique, résistance au vieillissement et aux produits de nettoyage. Il permet également de lubrifier les pièces métalliques qu'il recouvre.

### Art antérieur

Les surfaces métalliques qui sont régulièrement ou occasionnellement au contact des doigts, par exemple les flacons et/ou leurs bouchons, les stylos, les boucles de ceinture, les verres de lunettes métallisés ou encore sur les composants utilisés en microtechnique et microélectronique, sont susceptibles de subir des contaminations variées. La manipulation de ces objets, les produits qu'ils contiennent ou le contact de l'air ambiant peuvent entraîner, dans certaines circonstances, le dépôt de salissure et/ou une contamination microbiologique (champignons, bactéries, virus, etc.), ce qui peut être très problématique lorsque le contenu du flacon (crème, huile, parfum, médicament, etc.) est administré sur la peau ou ingurgité par l'utilisateur. Par ailleurs, la présence de ces traces disgracieuses peut être également problématique pour la commercialisation de ces objets.

Il est bien connu que les empreintes digitales sont à l'origine de bon nombre de ces taches. Les substances responsables de ces empreintes (substances grasses ou aqueuses) peuvent soit provenir de contaminations extérieures (transfert de salissure), soit être sécrétées par la peau (par exemple par la sueur, qui est une composition aqueuse et lipidique).

Les salissures (traces de doigts, contaminations, etc.) peuvent être nettoyées au moyen d'un agent nettoyant (lingette, savon, etc.) mais une telle opération est temporaire et doit être répétée fréquemment.

Un bon moyen de lutter durablement et efficacement contre le dépôt de tels contaminants serait de traiter les surfaces de façon à les rendre hydrophobes et lipophobes. Ce traitement permanent éviterait en effet que les composés lipophiles (graisses, sueur, cire, etc.) ou hydrophiles (eau, sueur, rosée, etc.) ne se déposent sur les surfaces et que les microorganismes qui y sont en suspension aient l'opportunité de s'y fixer.

Des revêtements de surface ont déjà été décrits pour limiter cette contamination et/ou le dépôt de salissure, notamment à base de composés organiques comprenant un acide carboxylique ou un acide phosphonique (WO2007/112312), ou à base d'acide organophosphoré (EP 1955638).

Cependant, ces techniques ne s'avèrent pas satisfaisantes, dans la mesure où elles ne permettent pas de traiter efficacement toutes les surfaces métalliques (notamment l'or et l'argent).

C'est pourquoi les présents Inventeurs ont cherché à identifier une méthode de fonctionnalisation de surface permettant d'augmenter durablement le caractère hydrophobe et lipophobe de surfaces constituées de n'importe quel métal, de façon à diminuer durablement et efficacement la corrosion, et/ou le dépôt de salissure sur ces surfaces. Cette couche de fonctionnalisation doit être résistante à des températures élevées, car l'objet peut être éventuellement soumis à un traitement à haute température, et à de multiples lavages.

Les Inventeurs se sont d'abord orientés vers les molécules thiols ayant pour formule générale H(CH₂)ₙSH, qui peuvent former des couches autoassemblées sur l'or (Bain C.D. et al, J. Am. Chem Soc 1989). Les atomes de soufre se lient à la surface métallique tandis que les chaînes alkyles pointent vers l'autre côté, s'alignant et s'organisant en un motif géométrique uniforme sur la surface (entraînant la formation de monocouches « autoassemblées »). Ces monocouches présentent à leur surface des molécules alkyles qui leur confèrent une certaine hydrophobicité. Cependant, un inconvénient majeur à utiliser de telles molécules est leur odeur très déplaisante. De plus, les couches autoassemblées constituées de perfluoroalkyl thiols présentent souvent une faible tenue en température et une faible résistance aux produits oxydants et réducteurs (Shi C. et al, J. Supercriti. Fluids 2000).

D'autre part, il est connu que les composés bisphosphonates, en particulier les composés bisphosphoniques porteurs d'un groupement perfluoré (BP-PF) ou perfluoropolyéther (BP-PFPE), modifient les propriétés de mouillabilité et rendent hydrophobes et lipophobes les surfaces qu'ils recouvrent (FR 2904784 et EP 2054165). Les solvants utilisés pour le dépôt de ces molécules sont les solvants organiques industriels classiques tels que les solvants alcooliques, les aldéhydes, les cétones, les éthers, etc. Ces composés sont capables de se fixer en monocouches autoassemblées sur des matériaux métalliques comme le fer, le titane, le cuivre, l'aluminium, le nickel, l'étain ou sur des métaux en alliage (par ex: l'acier, l'acier inoxydable, le laiton, le maillechort, le bronze, l'étain-nickel, le nickel-phosphore, le cuivre-bérylium).

Cependant, l'affinité des groupements phosphoniques varie d'une surface métallique ou minérale à l'autre ainsi que pour différents oxydes ou alliages (Folkers et al., Langmuir, (1995) 11, 813-824). De plus, de par leur faible degré d'oxydation, l'or, et l'argent ne sont pas compatibles avec une fixation forte de couches des composés bisphosphoniques PF et PFPE. Or les matériaux considérés dans cette invention peuvent être constitués de ces métaux, et il est donc important que la composition de l'invention puisse servir à fonctionnaliser les surfaces constituées de n'importe quel métal, y compris l'or et l'argent.

Par ailleurs, la fonctionnalisation de surfaces avec des polymères fluorés, lorsqu'elle est possible, présente l'inconvénient majeur de nécessiter l'emploi de solvants fluorés dont l'utilisation est contrôlée par une réglementation très stricte, et donc problématique.

Les Inventeurs ont découvert que le recouvrement d'une surface métallique par une composition comprenant à la fois des molécules thiols-perfluoropolyéther (thiols-PFPE) et des molécules BP-PFPE dans un solvant organique non fluoré permet d'augmenter sa lipophobicité et son hydrophobicité, de sorte à diminuer durablement et efficacement sa corrosion, et/ou le dépôt de salissure, et/ou la contamination microbiologique de cette surface. Ce recouvrement permet également de réduire l'énergie superficielle de ces surfaces et confère des propriétés lubrifiantes à ces surfaces. De façon importante, ces surfaces peuvent être constituées de n'importe quel métal.

La liaison forte des molécules thiol-PFPE et BP-PFPE pour les surfaces recouvertes permet d'éviter que l'utilisateur ou le produit qui est en contact avec ces surfaces ne soit contaminé par ces molécules.

### Résumé de l'invention

Dans un premier aspect, l'invention concerne une composition comprenant au moins un composé thiol et au moins un composé bisphosphonique ou un de leurs sels, caractérisée en ce que ledit composé thiol est de formule :

HS-A-B-C

Dans laquelle :
**A** est un groupement (CH2)ₘ-X-, m étant un entier compris entre 0 à 100, et X étant un groupement alkyle en C₀-C₁₀₀ saturé ou non, perfluoré ou partiellement fluoré, la chaîne alkyle pouvant être substituée ou interrompue par 0 à 10 groupements cycloalkyle ou aryle pouvant être perfluorés ou non ;
**B** est
   a) une liaison chimique simple, ou un atome O, S, ou un groupement S(CO), (CO)S, ou NR, (CO)NR, NR(CO), R étant un atome d'hydrogène ou un alkyle en C₁-C₁₀, ou
   b) 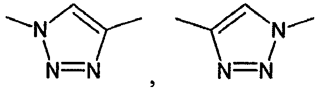 et
      C est choisi parmi : F(CF(CF₃)CF₂O)ₙ CF(CF₃)-,
      F(CF₂CF(CF₃)O)ₙCF₂CF₂-, F(CF₂CF₂CF₂O)ₙ CF₂CF₂-, et F(CF₂CF₂O)ₙCF₂-, et CₚF₂ₚ₊₁-, dans lesquels n et p sont des entiers compris entre 1 et 100,
      et caractérisé en ce que ledit composé bisphosphonique est de formule :

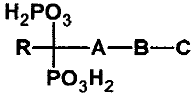

Dans laquelle :
**R** est un atome d'hydrogène H ou un groupement OH,
**A** est un groupement (CH₂)ₘ-X-,m étant un entier compris entre 0 et 100, X étant un groupement alkyle en C₀-C₁₀₀ saturé ou non, perfluoré ou partiellement fluoré, la chaîne alkyle pouvant être substituée ou interrompue par 0 à 10 groupements cycloalkyl ou aryle pouvant être perfluorés ou non ;
**B** est
   a) une liaison chimique simple, ou un atome O, S, ou un groupement S(CO), (CO)S, ou NR, (CO)NR, NR(CO), R étant un atome d'hydrogène ou un alkyle en C₁-C₁₀ ou
   b) 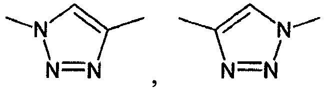 et
**C** est choisi parmi : (CF(CF₃)CF₂O)ₙCF(CF₃)-, F(CF₂ CF(CF₃)O)ₙCF₂CF₂₋, F(CF₂CF₂CF₂O)ₙ CF₂CF₂₋, F(CF₂CF₂O)ₙCF₂ et CₚF₂ₚ₊₁-, dans lesquels n et p sont des entiers compris entre 1 et 100.

De préférence, ledit composé thiol est un thiol-perfluoré de formule I suivante : 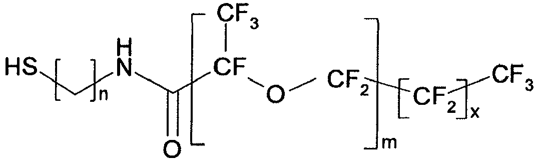 dans laquelle : n est un entier compris entre 1 et 100, m est un entier compris entre 1 et 100, et x est un entier compris entre 1 et 10 et ledit composé bisphosphonique est un bisphosphonique perfluoré de formule II suivante : 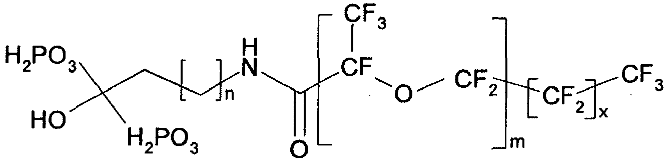 dans laquelle : n est un entier compris entre 1 et 100, m est un entier compris entre 1 et 100, et x est un entier compris entre 1 et 10.

De manière encore plus préférée, ledit composé thiol-perfluoré est un composé de formule I dans laquelle n=6, m=4, et x=1, ou n=2, m=4, et x=1, ou n=6, m=5, et x=1, ou n=2, m=5, et x=1, et ledit composé bisphosphonique perfluoré est un composé de formule II dans laquelle n=4, m=4, et x=1.

Dans un mode de réalisation particulier de l'invention, lesdits composés bisphosphoniques et lesdits composés thiols sont dissous dans l'eau ou dans un solvant organique choisi parmi les solvants alcooliques, en particulier les alcools en C₁ à C₆, tels que l'isopropanol,, l'éthanol, le méthanol, les aldéhydes, les cétones tels que l'acétone, des éthers tels que le diéthyléther ou le tétrahydrofurane ou les alcanes, notamment des alcanes en C₁ à C₈, ainsi que leurs mélanges ou dans un solvant composé de naphtas hydrotraités en mélange avec par exemple l'IPA ou l'acétone.

Cette composition permet de limiter la corrosion des surfaces qu'elle recouvre, de diminuer le dépôt de salissure et/ou la contamination microbiologique de celles-ci.

Dans un second aspect, la présente invention vise donc l'utilisation d'une telle composition pour augmenter l'hydrophobicité et la lipophobicité d'une surface, l'utilisation d'une telle composition pour limiter la corrosion d'une surface, et l'utilisation d'une telle composition pour limiter le dépôt de salissure et/ou la contamination microbiologique sur une surface. De préférence, ladite surface est métallique.

Dans un autre aspect, ces compositions peuvent être utilisées pour diminuer l'énergie superficielle des surfaces traitées et donc pour lubrifier des pièces métalliques en diminuant leur coefficient de friction et en limitant leur usure mécanique.

Ces surfaces peuvent être destinées à être utilisées dans des flacons, notamment dans les domaines pharmaceutiques, cosmétologiques, de la parfumerie, ou sur des bijoux ou autres articles de luxe, ou dans des pièces utilisées en microtechnique et microélectronique (pièces optiques, lentilles, puces téléphoniques, micromoteurs, micropinces, pacemaker, etc.....).

Ces surfaces métalliques peuvent être constituées à plus de 50 % de :
- métaux nobles choisis parmi l'or, le platine, l'argent et le cuivre,
- de métaux oxydés choisis parmi le fer, le titane, l'aluminium, le rubis, le saphir, le nickel, le ruthénium, le rhodium et l'étain,
- d'alliages choisis parmi l'acier, acier inoxydable, laiton, maillechort, bronze, étain-nickel, nickel-phosphore, cuivre-bérylium, palladium-nickel, cuivre-cobalt, ou d'alliages comprenant du vanadium, du chrome, du manganèse, du zinc, du tungstène, ou du zirconium, ou autre alliage amorphe, ou
- de céramiques, ou
- de semi-conducteurs comme le silicium ou le germanium, ainsi que leurs oxydes, ou encore de diamant.

Dans un troisième aspect, la présente invention vise un procédé de recouvrement d'une surface, de préférence métallique, par une couche moléculaire de fonctionnalisation, caractérisé en ce qu'il comprend au moins les étapes suivantes :
a) Éventuellement, le dégraissage de la surface par un lavage dans un solvant puis séchage,
b) Éventuellement, oxydation de la surface de façon à disposer les fonctions hydroxyles à la surface du substrat,
c) mise en contact de la surface avec une composition de l'invention, jusqu'à autoassemblage des composés thiols et/ou bisphosphoniques en une monocouche recouvrant ladite surface,
d) élimination du surnageant,
e) éventuellement, déshydratation de la surface ainsi recouverte,
f) rinçage de la surface fonctionnalisée
g) séchage de la surface fonctionnalisée.

Dans un quatrième aspect, la présente invention vise l'utilisation d'une surface fonctionnalisée obtenue à partir du procédé défini précédemment pour la fabrication de flacons, récipients, pièces mécaniques ou de finition destinés à être utilisé en cosmétique, pharmaceutique, dans un produit de luxe et/ou en parfumerie, ou encore dans le domaine des microtechniques ou de la microélectronique.

Enfin, la présente invention vise l'utilisation, pour augmenter l'hydrophobicité et la lipophobicité d'une surface, pour limiter la corrosion d'une surface, ou pour limiter le dépôt de salissure et/ou la contamination microbiologique sur une surface, d'une composition contenant le composé thiol de formule 1.3 (comme seul agent actif):

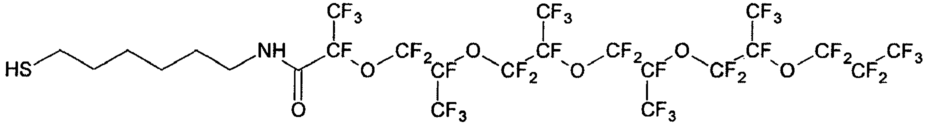

Dans un mode de réalisation particulier, ladite surface est une surface métallique constituée à plus de 50% d'un métal noble choisi parmi l'or, l'argent, le cuivre et le composé de formule 1.3. est solubilisé dans de l'isopropanol ou dans un solvant composé de naphtas hydrotraités.

### Légendes des figures

La figure 1 présente des composés thiols-PF (I.5) et thiols-PFPE (I.1 à I.4 et I.6) de formule I selon l'invention.

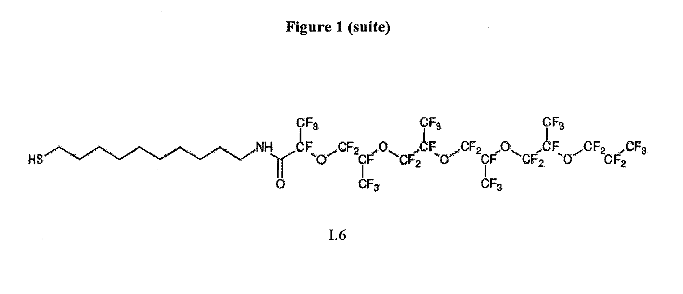

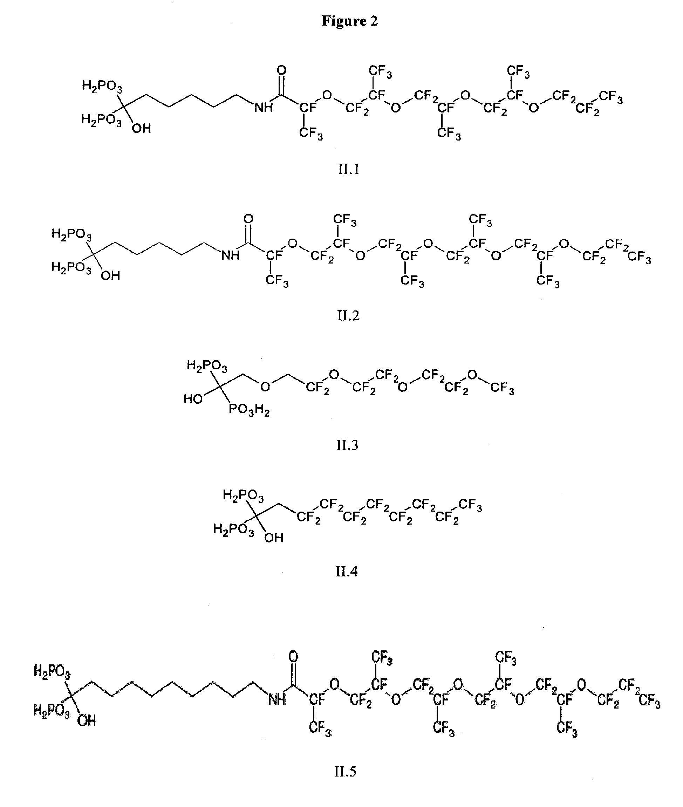

La figure 2 présente des exemples de molécules BP-PF et BP-PFPE de formule II selon l'invention.

### Description détaillée de l'invention

Les présents Inventeurs ont pu démontrer qu'une composition de recouvrement comprenant i) des composés thiols, en mélange avec ii) des composés bisphosphoniques, permettent de recouvrir un grand nombre de surfaces métalliques, dont celles en or, en argent ou leurs alliages, et de diminuer très efficacement et durablement la corrosion sur ces surfaces, ainsi que le dépôt de salissure.

En effet, les monocouches formées suite au recouvrement des surfaces avec la composition de l'invention confèrent un caractère hydrophobe et lipophobe à ces surfaces, ce qui limite l'attachement de gouttelettes d'eau, de sueur, et/ou de matières grasses et donc la mise en contact prolongée des microorganismes qu'elles contiennent. Avantageusement, cette composition de recouvrement ne comprend pas de solvant fluoré.

Dans un premier aspect, la présente invention concerne une composition de recouvrement, appelée ici « composition de recouvrement de l'invention », comprenant au moins un composé thiol et au moins un composé bisphosphonique, ou l'un de leurs sels.

Les composés thiols présents dans la composition de recouvrement de la présente invention sont de formule :

HS-A-B-C

Dans laquelle :
**A** est un groupement (CH₂)ₘ-X-, m étant un entier compris entre 0 à 100, et X étant un groupement alkyle en C₀-C₁₀₀ saturé ou non, perfluoré ou partiellement fluoré, la chaîne alkyle pouvant être substituée ou interrompue par 0 à 10 groupements cycloalkyle ou aryle pouvant être perfluorés ou non ;
**B** est
   a) une liaison chimique simple, ou un atome O, S, ou un groupement S(CO), (CO)S, ou NR, (CO)NR, NR(CO), R étant un atome d'hydrogène ou un alkyle en C₁-C₁₀, ou
   b) 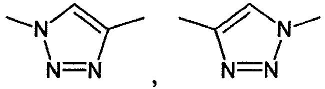 et
C est choisi parmi : F(CF(CF₃)CF₂ O)ₙ CF(CF₃)-, F(CF₂CF(CF₃)O)nCF₂CF₂-, F(CF₂CF₂CF₂O)ₙ CF₂CF₂-, et F(CF₂CF₂O)ₙCF₂-, et CₚF₂ₚ₊₁-, dans lesquels n et p sont des entiers compris entre 1 et 100.

Par ailleurs, le composé bisphosphonique présent dans la composition de recouvrement de la présente invention est de formule : 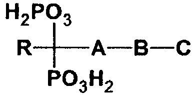 Dans laquelle :
**R** est un atome d'hydrogène H ou un groupement OH,
**A** est un groupement (CH₂)ₘ-X-,m étant un entier compris entre 0 et 100, X étant un groupement alkyle en C₀-C₁₀₀ saturé ou non, perfluoré ou partiellement fluoré, la chaîne alkyle pouvant être substituée ou interrompue par 0 à 10 groupements cycloalkyl ou aryle pouvant être perfluorés ou non ;
**B** est
   a) une liaison chimique simple, ou un atome O, S, ou un groupement S(CO), (CO)S, ou NR, (CO)NR, NR(CO), R étant un atome d'hydrogène ou un alkyle en C₁-C₁₀ ou
   b) 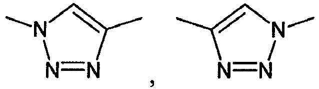
   et
**C** est choisi parmi : (CF(CF₃)CF₂O)ₙCF(CF₃)-, F(CF₂CF(CF₃)O)ₙCF₂CF₂₋, F(CF₂CF₂CF₂O)ₙ CF₂CF₂₋, F(CF₂CF₂O)ₙCF₂ et CₚF₂ₚ₊₁-, dans lesquels n et p sont des entiers compris entre 1 et 100.

Par groupement « alkyle en C₀-C₁₀₀», on entend, au sens de la présente invention, une chaîne hydrocarbonée divalente saturée, linéaire ou ramifiée, comportant 0 à 100, de préférence 1 à 10, atomes de carbone. A titre d'exemple, on peut citer les groupes méthylène, éthylène, propylène, isopropylène, butylène, isobutylène, sec-butylène, pentylène ou encore hexylène.

Par « perfluoré » on entend désigner une molécule substituée par au moins un groupement CF3(CF2)ₙ, n étant de préférence compris entre 0 et 50, de manière encore plus préférée compris entre 0 et 10.

Par « partiellement fluoré », on entend désigner une molécule dont les atomes de carbone sont substitués au moins partiellement par des atomes de fluor.

Par groupement « cycloalkyle », on entend, au sens de la présente invention, une chaîne hydrocarbonée saturée cyclique, comportant de préférence entre 3 à 7 atomes de carbone cycliques. A titre d'exemple, on peut citer les groupes cyclopropyle, cyclopentyle, cyclohexyle et cycloheptyle.

Par « aryle », on entend, au sens de la présente invention, un groupement aromatique, comportant de préférence de 6 à 10 atomes de carbone, et comprenant un ou plusieurs cycles accolés, comme par exemple un groupement phényle ou naphtyle. Avantageusement, il s'agit du phényle.

Parmi les sels possibles, on inclut notamment les sels de sodium ou de potassium, les sels de calcium ou de magnésium, ou des sels formés par des ligands organiques appropriés tels que des sels d'ammonium quaternaire. Les sels sont donc de préférence choisis parmi les sels de sodium, potassium, magnésium, calcium, ammonium.

De préférence, le composé thiol présent dans la composition de recouvrement de l'invention est un thiol-perfluoré de formule I suivante : 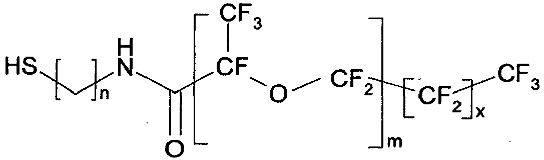 dans laquelle : n est un entier compris entre 1 et 100, m est un entier compris entre 1 et 100, et x est un entier compris entre 1 et 10, ou l'un de ses sels, de préférence le sel de potassium, de sodium, de magnésium, de calcium, ou d'ammonium.

De manière préférée, n est compris entre 1 et 20, et, de manière encore plus préférée, entre 1 et 10 ; de manière préférée, m est compris entre 1 et 20, et, de manière encore plus préférée, entre 1 et 10 ; de manière préférée, x est compris entre 1 et 5 ; de manière plus préférée, x vaut 1.

De préférence, le composé bisphosphonique présent dans la composition de recouvrement de l'invention est un bisphosphonique perfluoré de formule II suivante : 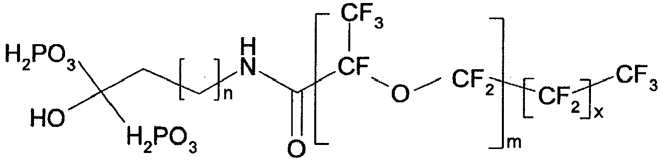 dans laquelle : n est un entier compris entre 1 et 100, m est un entier compris entre 1 et 100, et x est un entier compris entre 1 et 10, ou l'un de ses sels, de préférence le sel de potassium, de sodium, de magnésium, de calcium, ou d'ammonium.

De manière préférée, n est compris entre 1 et 20, et, de manière encore plus préférée, entre 1 et 10 ; de manière préférée, m est compris entre 1 et 20, et, de manière encore plus préférée entre 1 et 10 ; de manière préférée, x est compris entre 1 et 5 ; de manière plus préférée, x vaut 1.

Selon un mode de réalisation préféré, les bisphosphonates présents dans la composition de recouvrement de l'invention sont donc porteurs d'un groupement perfluoré (BP-PF) ou perfluoropolyéther (BP-PFPE) telles que décrites dans la demande de brevet N° FR2904784 et EP 2 054 165. Ces molécules sont capables, du fait de la multiplicité des groupements phosphonate (-PO₃H₂), de se greffer de façon permanente en monocouches autoassemblées sur des surfaces minérales ou métalliques. La caractérisation physicochimique de la monocouche obtenue à partir de ces molécules est décrite de manière détaillée dans l'article de Lecollinet et al. (Langmuir, 2009). Les molécules bisphosphonates se fixent en monocouches autoassemblées sur des matériaux métalliques ou minéraux, préférentiellement oxydés comme le fer, le titane, le cuivre, l'aluminium, le rubis, le saphir, le nickel, l'étain, le silicium ou sur des métaux en alliage (par ex: l'acier, l'acier inoxydable, le laiton, le maillechort, le bronze, l'étain-nickel, le nickel-phosphore, le cuivre-bérylium). La réduction de l'énergie de surface du matériau traité est alors importante (énergie de surface <20 mJ/m²).

De préférence, la composition de recouvrement de l'invention est utilisée pour limiter la corrosion des surfaces qu'elle recouvre, pour diminuer le dépôt de salissure et/ou la contamination microbiologique sur celles-ci. Ladite surface est de préférence métallique.

La composition de recouvrement peut être liquide, gazeuse ou supercritique. Lorsqu'elle est liquide, la composition de recouvrement de l'invention peut être une composition aqueuse ou organique. Le solvant de la composition liquide est choisi de manière à permettre la solubilisation des deux types de composés présents dans la composition. Ce solvant organique pourra être choisi parmi des solvants alcooliques, en particulier des alcools en C₁ à C₆, tels que l'isopropanol, l'éthanol, le méthanol, des aldéhydes, des cétones tels que l'acétone, des éthers tels que le diéthyléther ou le tétrahydrofurane ou des alcanes, notamment des alcanes en C₁ à C₈, ainsi que leurs mélanges, ou encore dans un solvant composé de napthas hydrotraités en mélange par exemple avec de l'IPA ou de l'acétone. La composition peut être gazeuse, les composés BP et thiols peuvent être notamment à l'état de vapeur. Par "composition supercritique", on entend une composition qui se trouve dans un état de fluide supercritique.

La composition de recouvrement de l'invention se présente avantageusement sous forme d'une solution, d'une suspension, d'une émulsion, d'un fluide supercritique, d'un aérosol ou d'une mousse. La teneur en composés bisphosphoniques dans la composition liquide de recouvrement est avantageusement comprise entre 0,0001 et 20 % en poids, de préférence entre 0,001 et 5 % en poids, et la teneur en composés thiols dans la composition liquide de recouvrement est avantageusement comprise entre 0,0001 et 20 % en poids, de préférence entre 0,001 et 5 % en poids.

Selon un mode de réalisation, les composés thiols et BP sont intégrés dans la composition de recouvrement de l'invention à une concentration molaire comprise entre 10⁻¹ et 10⁻¹⁵ mol/L de chaque composé, de préférence comprise entre 10⁻³ et 10⁻⁵ mol/L. Avantageusement, les deux composés, thiol et bisphosphonate, ont la même concentration.

Dans un mode de réalisation préféré, la surface métallique recouverte est constituée à plus de 50 %, de préférence à plus de 75%, de manière encore plus préférée de 85%:
- de métaux nobles choisis parmi l'or (Au), le platine (Pt), l'argent (Ag) et le cuivre (Cu),
- de métaux oxydés choisis parmi le fer (Fe), le titane (Ti), l'aluminium (Al), le rubis (alliage d'oxyde d'aluminium et de Chrome, n°CAS 12174-49-1), le saphir (oxyde d'aluminium, n° CAS 1317-82-4), le nickel (Ni), le ruthénium (Ru), le rhodium (Rh) et l'étain (Sn),
- d'alliages choisis parmi l'acier (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-bérylium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe, ou
- de céramiques, ou
- de semi-conducteurs comme le silicium (Si) ou le germanium (Ge), ainsi que leurs oxydes, ou encore de diamant.

Au sens de la présente invention, un alliage est dit « amorphe » lorsque les atomes ne respectent aucun ordre à moyenne et grande distance (à l'inverse des composés cristallisés). Les verres sont des composés amorphes.

Au sens de la présente invention, les céramiques sont de structure cristalline ou partiellement cristalline, ou en verre, et formées de substances essentiellement inorganiques et non métalliques, par une masse en fusion qui se solidifie en se refroidissant, ou qui est formé et porté à maturité, en même temps ou ultérieurement, par l'action de la chaleur. Il peut s'agir de céramiques d'oxydes (oxydes d'aluminium, de zirconium), de céramiques non-oxydes (carbures, borures, nitrures, céramiques composées de silicium et d'atomes tels que tungstène, magnésium, platine, ou encore titane) ; ou enfin de céramiques composites (combinaison des oxydes et des non-oxydes, comme le rubis).

De préférence, la composition de recouvrement de l'invention contient un composé thiol-perfluoré de formule I telle que définie ci-dessus, et un composé bisphosphonique perfluoré de formule II telle que définie ci-dessus.

De manière encore plus préférée, la composition de l'invention contient un composé thiol-perfluoré de formule I dans laquelle n=6, m=4, et x=1, ou n=2, m=4, et x=1, ou n=6, m=5, et x=1, ou n=10, m=5 et x=1 ou n=2, m=5, et x=1, et un composé bisphosphonique perfluoré de formule II dans laquelle n=4, m=4, et x=1 ou n=8, m=5 et x=1.

De manière préférée entre toutes, la composition de l'invention contient un composé thiol-perfluoropolyéther de formule I dans laquelle n=6, m=5, et x=1, et un composé bisphosphonique perfluoré de formule II dans laquelle n=4, m=4, et x=1.

Le solvant de la composition liquide de recouvrement de l'invention est choisi de manière à permettre la solubilisation des deux types de composés qu'elle contient. Ce solvant pourra être choisi parmi des solvants alcooliques, en particulier des alcools en C₁ à C₆, tels que l'isopropanol, l'éthanol, le méthanol, des aldéhydes, des cétones tels que l'acétone, des éthers tels que le diéthyléther ou le tétrahydrofurane ou des alcanes, notamment des alcanes en C₁ à C₈, ainsi que leurs mélanges. De manière encore plus préférée, le solvant est l'alcool isopropylique (IPA) (ou isopropanol), ou un solvant composé de naphtas hydrotraités en mélange par exemple avec de l'IPA ou de l'acétone.

Dans un second aspect, la présente invention vise l'utilisation d'une telle composition pour augmenter l'hydrophobicité et/ou la lipophobicité d'une surface, de préférence d'une surface métallique.

Ces propriétés avantageuses sont utilisées pour limiter le dépôt de salissure, de moisissure et/ou la contamination microbiologique sur ces surfaces.

La composition de l'invention peut également être utilisée avantageusement pour limiter la corrosion sur ces surfaces.

Ces compositions peuvent également être utilisées pour diminuer l'énergie superficielle des surfaces traitées. Comme décrit dans les demandes FR 2904784 et EP 2054165, l'utilisation de couches de faible énergie superficielle est largement répandue dans le domaine de la lubrification de pièces mécaniques. Cette notion de lubrification recouvre en réalité de très nombreux phénomènes physiques, de type collage des surfaces (dues aux aspérités de surface mais également énergies superficielles des matériaux enjeu), glissement sur des couches superficielles, « surfing » sur le liquide plus ou moins visqueux (lubrification «hydrodynamique»). Dans le cadre de lubrification de pièces métalliques, il est souhaitable de disposer de couches très fortement fixées qui conduisent à des surfaces de faible énergie superficielle. Par conséquent, l'utilisation d'un mélange thiol-bisphosphonate présentant à la fois une liaison forte avec le matériau support et un groupement perfluoré ou perfluoropolyéther permet une lubrification sèche de ces matériaux.

Dans un troisième aspect, la composition de l'invention peut donc être utilisée pour lubrifier une surface métallique (surface d'une pièce métallique ou d'une pièce recouverte d'une couche de métal) en diminuant le coefficient de friction et en limitant l'usure mécanique des pièces ainsi protégées.

Dans un quatrième aspect, la présente invention concerne un procédé de recouvrement d'une surface, de préférence métallique, par une couche moléculaire de fonctionnalisation, caractérisé en ce qu'il comprend au moins les étapes suivantes :
a) éventuellement, le dégraissage de la surface par un lavage dans un solvant puis séchage,
b) éventuellement, l'oxydation de la surface de façon à disposer les fonctions hydroxyles à la surface du substrat,
c) mise en contact de la surface avec la composition de l'invention, jusqu'à autoassemblage des composés thiols et/ou bisphosphoniques en une monocouche recouvrant ladite surface,
d) élimination du surnageant,
e) éventuellement, déshydratation de la surface ainsi recouverte,
f) rinçage de la surface fonctionnalisée
g) séchage de la surface fonctionnalisée, de préférence à chaud.

De préférence, les surfaces recouvertes par ce procédé sont utilisées dans les flacons et/ou bouchons destinés à l'industrie cosmétique, pharmaceutique, et/ou en parfumerie, sur des bijoux ou autres accessoires de luxe, dans les pièces utilisées en microtechnique (puces téléphoniques, micro-pinces, pacemakers, micromoteurs, etc.) ou sur tout autre objet recouvert d'une surface métallique potentiellement en contact avec les doigts, l'air, ou un liquide dont il faudrait la protéger (poignée de porte, ceinturon, lunettes, stylos, ciseaux, etc.).

Dans le cadre de la présente invention, on entend par « micromécanique » l'ensemble des techniques utilisées de la conception à la manufacture (puis la réparation) des objets de petites dimensions. Les microtechniques englobent les appareils et machines qui acquièrent, traitent et restituent l'information. Elles concernent les produits et activités suivants : la bureautique, l'informatique, les instruments et métrologie, les appareils de commande (amplificateurs de signaux, commande à distance, installation de mesures à distance), les appareils de télécommunications, l'électronique grand public, les jouets techniques, la monétique, les appareils optiques, l'électroménager les équipements de production industrielle, l'instrumentation médicale, ou encore les composants de petite taille (relais, moteurs, microrupteurs, capteurs, prises électriques). L'échelle des microtechniques commence au micromètre (µm, soit 10-6 mètre) pour finir au millimètre.

Dans le cadre de la présente invention, on entend par « couche moléculaire de fonctionnalisation », une couche composée de molécules qui sont chacune ancrées au substrat par l'une au moins de leurs terminaisons et disposées les unes à côtés des autres. Les molécules sont ancrées au substrat de préférence par leurs terminaisons thiols ou bisphosphoniques. Leur organisation en surface et les différents groupements chimiques qu'elles présentent permettent de modifier les propriétés chimiques ou physiques des surfaces ainsi recouvertes. L'épaisseur de la couche moléculaire obtenue selon le procédé objet de la présente invention est avantageusement de l'ordre du nanomètre, c'est-à-dire comprise entre 0,1 nm et 50 nm.

On entend par "substrat hydroxylé", un substrat dont la surface présente des fonctions -OH sous la forme X-OH (X étant un élément constitutif de la surface). Plus la surface du substrat présente de fonctions -OH et plus la densité de composés gembisphosphoniques fixés sur cette surface est importante.

Il est possible d'avoir recours à une oxydation préalable de la surface du substrat de façon à disposer d'un nombre suffisant de fonctions hydroxyles à la surface du substrat (étape b). Dans la pratique, on effectuera l'oxydation préalable de la surface du substrat de façon à disposer de suffisamment de fonctions hydroxyles sur la surface du substrat pour permettre la fixation des composés bisphosphoniques, lorsque ledit substrat n'en est pratiquement pas pourvu ou très peu. On peut aussi le faire lorsqu'on souhaite augmenter le nombre de fonctions hydroxyles déjà présentes, afin d'obtenir un recouvrement plus important de la surface par les composés bisphosphoniques. Il est avantageux de réaliser cette étape d'oxydation sur une surface comprenant du silicium.

Selon le procédé objet de la présente invention, la surface est mise en contact avec une composition liquide de recouvrement contenant les composés BP et thiols jusqu'à auto-assemblage desdits composés en une couche recouvrant ladite surface (étape c). Typiquement, la durée de mise en contact de la composition sur la surface à traiter est comprise entre 10 secondes et 6 heures, de manière préférée entre 1 minute et 1 heure, de manière encore plus préférée entre 3 minutes et 30 minutes. La mise en contact de la composition liquide de recouvrement avec la surface du substrat est réalisée avantageusement par trempage, par spin-coating, par essuyage, par vaporisation, par aérosol ou par pulvérisation. Lorsque la composition de recouvrement est gazeuse ou supercritique, la mise en contact avec la surface du substrat peut être réalisée à l'aide d'un réacteur dont la pression et la température sont contrôlables et qui permet l'injection d'un gaz tel que le CO₂.

Après l'étape de mise en contact de la surface avec la composition de recouvrement, on procède à l'élimination de la composition de recouvrement (étape d), de façon à éliminer de la surface le solvant et tous les solutés thiols et bisphosphoniques qui ne se sont pas fixés au substrat lors de la mise en contact. L'élimination de la composition de recouvrement peut être réalisée par rinçage, ou mécaniquement par égouttage, centrifugation ou évaporation. La surface peut être en outre rincée notamment par immersion dans un solvant approprié, afin d'assurer une élimination complète du soluté non fixé. Ledit solvant approprié est de préférence celui utilisé pour préparer la solution.

Le procédé objet de la présente invention permet le greffage de type covalent des BP et/ou des thiols sur les surfaces métalliques oxydées ou céramiques (étape e) en utilisant éventuellement des techniques de déshydratation par chauffage sous pression réduite ou non qui permet de transformer une interaction électrostatique en une liaison de type covalente P-O-X (X étant un élément constitutif de la surface). Il est avantageux de réaliser cette étape de déshydratation sur du rubis, du silicium ou du titane par exemple.

Avantageusement, lorsqu'elle est requise, l'étape de déshydratation de la surface est réalisée thermiquement, de préférence sous pression réduite, notamment au moyen d'un lyophilisateur. Plus particulièrement, la déshydratation de la surface du substrat peut être réalisée par chauffage de celle-ci à une température comprise entre 20°C et 150°C, de préférence à environ 50 °C, sous une pression comprise entre 0,01 mBar et 1 Bar, de préférence à 0,3 mbar, pendant un temps compris entre 1 et 72 heures, de préférence pendant environ 15 heures. Il est également possible de déshydrater la surface à pression atmosphérique pendant 15 heures à 120°C.

La surface est rincée (étape f) notamment par immersion dans un solvant approprié, afin d'assurer une élimination complète du soluté non fixé. Cette étape peut être réalisée en utilisant des ultrasons. Ledit solvant approprié est de préférence celui utilisé pour préparer la solution.

Les étapes e) et f) peuvent être interverties, le rinçage ayant lieu avant la déshydratation de la surface recouverte.

La surface peut être séchée (étape g) sous flux d'air chaud, par exemple à 70°C pendant 2 minutes.

Les étapes c) à f) du procédé de recouvrement de l'invention peuvent être itérées, ce qui peut améliorer l'efficacité de recouvrement.

Le procédé objet de la présente invention permet de recouvrir des surfaces métalliques constituées à plus de 50 %, de préférence à plus de 75%, de manière encore plus préférée de 85%:
- de métaux nobles choisis parmi l'or (Au), le platine (Pt), l'argent (Ag) et le cuivre (Cu),
- de métaux oxydés choisis parmi le fer (Fe), le titane (Ti), l'aluminium (Al), le rubis (alliage d'oxyde d'aluminium et de Chrome, n°CAS 12174-49-1), le saphir (oxyde d'aluminium, n° CAS 1317-82-4), le nickel (Ni), le ruthénium (Ru), le rhodium (Rh) et l'étain (Sn),
- d'alliages choisis parmi l'acier (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-bérylium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe,

- de céramiques, ou
- de semi-conducteurs comme le silicium (Si) ou le germanium (Ge), ainsi que leurs oxydes, ou encore de diamant.

Enfin, dans un cinquième aspect, la présente invention concerne l'utilisation d'une surface fonctionnalisée grâce au procédé de l'invention pour la fabrication de flacons et/ou de bouchons destinés à l'industrie cosmétique, pharmaceutique, ou en parfumerie, de bijoux ou d'articles de luxe, de pièces de micromécanique ou de microélectronique, ou de tout autre objet métallique ou recouvert d'une surface métallique et sensible aux traces de doigt (par exemple les poignées de porte, les stylos, les ceinturons, les verres métallisés de lunette, etc.).

La présente invention décrit également des compositions comprenant une quantité efficace des composés thiols et bisphosphoniques, de préférence de formule (I) et (II), ou de leurs sels, capables de se fixer durablement sur des surfaces métalliques destinées au flaconnage ou au recouvrement de tout objet potentiellement au contact des doigts, de l'air ou d'un liquide quelconque, et aptes à en augmenter la lipophobicité, et/ou l'hydrophobicité et donc aptes à limiter le dépôt de moisissure, de salissure, et donc la contamination microbiologique sur ces surfaces.

Ces compositions sont également aptes à diminuer la corrosion de ces surfaces ou à lubrifier ces surfaces.

Plus particulièrement, la composition de l'invention permet d'obtenir un angle de contact entre une huile et la surface recouverte d'au moins 30°, et un angle entre l'eau et la surface recouverte d'au moins 90°.

Par le terme « quantité efficace », on entend que la quantité de composé appliquée permet, après recouvrement, de former un film monomoléculaire permettant d'obtenir les angles ci-dessus mentionnés.

Dans un dernier aspect, la présente invention concerne une composition de recouvrement comprenant au moins le composé thiol de formule I dans laquelle n=6, m = 5 et x=1, soit la formule 1.3.: 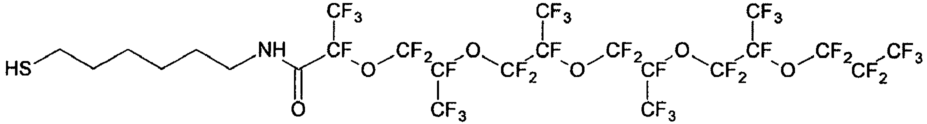 , ou l'un de ses sels, de préférence le sel de potassium, de sodium, de magnésium, de calcium, ou d'ammonium.

Les présents Inventeurs ont en effet découvert que cette molécule particulière était plus efficace que d'autres molécules de formule I pour augmenter l'effet lipophobe et hydrophobe (cf. exemple 9 ci-dessous). En plus de ces caractéristiques, cette molécule est soluble dans de nombreux solvants et mélanges de solvants. Une fois déposées sur des surfaces métalliques, les couches formées par ces molécules présentent une résistance importante aux lavages.

La présente invention concerne donc également l'utilisation d'une composition contenant, comme seul principe actif de recouvrement, le composé thiol de formule 1.3: 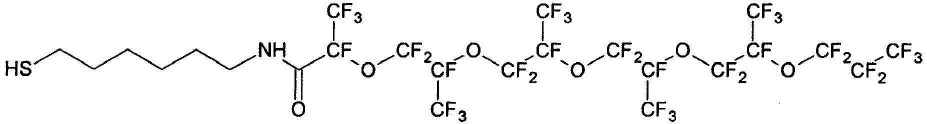 pour augmenter l'hydrophobicité et la lipophobicité d'une surface, ou pour limiter la corrosion d'une surface, et/ou le dépôt de salissure et/ou la contamination microbiologique sur une surface, ladite surface étant de préférence utilisée sur la surface de flacons et/ou de leurs bouchons, par exemple destinés à l'industrie cosmétique, pharmaceutique et/ou en parfumerie, dans des bijoux ou autres articles de luxe, sur un objet micromécanique, microélectronique ou tout autre objet potentiellement mis au contact des doigts (lunettes, stylos, ceinturons, etc.).

De préférence, ladite surface est métallique et constituée à plus de 50% en or, argent ou cuivre.

Cette composition peut également être utilisée pour lubrifier des pièces métalliques ou recouvertes d'une surface métallique.

Cette composition de recouvrement peut être une composition aqueuse ou organique comprenant un solvant organique choisi parmi des solvants alcooliques, en particulier des alcools en C₁ à C₆, tels que l'isopropanol, l'éthanol, le méthanol, des aldéhydes, des cétones tels que l'acétone, des éthers tels que le diéthyléther ou le tétrahydrofurane ou des alcanes, notamment des alcanes en C₁ à C₈, ainsi que les mélanges de ces solvants. Le solvant peut également être composé de naphtas hydrotraités (par exemple le solvant Biosane T212 de la marque MMCC) mélangé à de l'IPA ou de l'acétone. De préférence, le solvant est l'isopropanol et/ou composé de naphtas hydrotraités en mélange avec l'IPA.

### Exemples

### 1. Synthèse d'un composé thiol-PFPE I.3 de formule I selon l'invention :

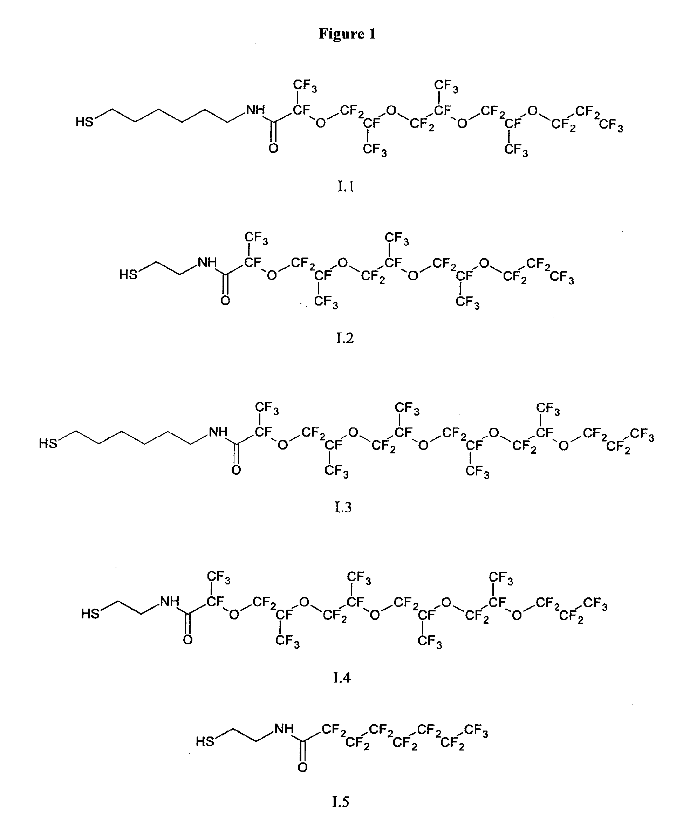

Le composé 1.3 (identifié sur la figure 1) peut être préparé en quatre étapes suivant le schéma de synthèse représenté ci-dessous.

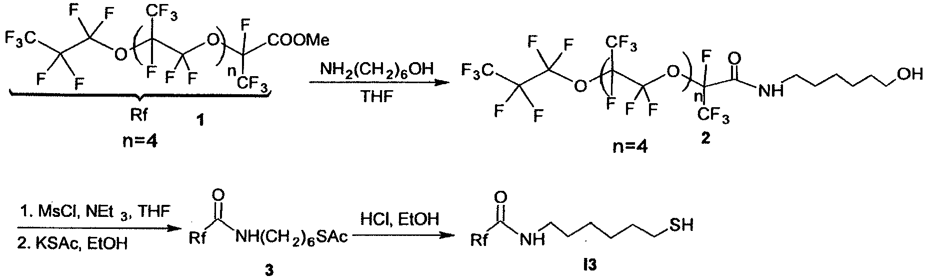

### • Préparation de l'alcool 2

Dans un tricol de 100 mL surmonté d'un réfrigérant est dissout le 6-aminohexan-1-ol (3.5 g ; 29.7 mmol, 3éq.) dans 40 mL de THF sous argon. L'ester méthylique 1 (10g ; 9.9 mmol) est ajouté en une fois. Le mélange biphasique est chauffé à 50 °C jusqu'à dissolution complète du dérivé perfluoré (environ 20 min) puis agité à température ambiante sous argon pendant 17 heures. Après concentration au rotavapor, le sirop obtenu est repris dans l'AcOEt (120 mL) lavé avec une solution d'acide chlorhydrique 0.5 N (40 mL) puis à l'eau distillée (40 mL) et enfin à la saumure (30 mL). La phase organique est séchée (MgSO4), filtrée puis concentrée sous vide (rotavapor puis pompe à palette). L'amide 2 est obtenu sous la forme d'une huile incolore.
Masse obtenue : 10.3 g
Rendement : 95 %
1H RMN (270 MHz, acétone-d6) δ (ppm) = 3.53 (t, 2H, CH2OH), 3.37 (m, 2H, CH2NH), 1.71-1.29 (m, 8H, 4 CH2).
13C RMN (acétone-d6) δ (ppm) = 158.1 (d, J2C-F = 24.9 Hz, CONH), 126.1-101.2 (m, CFs), 62.7 (CH2OH), 41.1 (CH2NH), 33.9, 29.8, 27.5, 26.5 (4 CH2).

### • Préparation du thioacétate 3

L'amide 2 (10.3 g, 9.4 mmol) placé dans un ballon monocol de 250 mL est dissout dans 60 mL de THF sous argon, la triéthylamine (3.97 mL, 3 éq.) est ajoutée, puis le chlorure de méthanesulfonyle (1.46 mL, 2 éq.) en refroidissant dans un bain eau-glace. La suspension est agitée à t.a. sous argon pendant 17h. Après concentration au rotavapor le mélange est repris dans l'AcOEt (120 mL) puis lavé à l'eau distillée (50 mL) et enfin à la saumure (40 mL). La phase organique est séchée (MgSO4), filtrée puis concentrée sous vide (rotavapor). L'huile incolore obtenue (mésylate) est dissoute dans 150 mL d'EtOH, la solution est additionnée de thioacétate de potassium KSAc (2.14 g, 2 éq.) puis chauffée sous argon à 60°C pendant 2h. Après refroidissement à température ambiante le mélange est concentré au rotavapor, le résidu est repris dans l'AcOEt (120 mL) puis lavé à l'eau distillée (2 x 50 mL) et enfin à la saumure (40 mL). La phase organique est séchée (MgSO4), filtrée puis concentrée sous vide (rotavapor). Le thioacétate 3 est obtenu sous forme d'une huile orange.
Masse obtenue : 9.5 g
Rendement : 88 %
1H RMN (270 MHz, acétone-d6) δ (ppm) = 3.37 (m, 2H, CH2NH), 2.85 (t, 2H, CH2S), 2.28 (s, 3H, SAc), 1.75-1.29 (m, 8H, 4 CH2).
13C RMN (acétone-d6) δ (ppm) = 195.4 (COCH3), 158.5 (d, J2C-F = 24.9 Hz, CONH), 125.9-100.9 (m, CFs), 41.1 (CH2NH), 30.6, 29.6, 29.2, 27.1 (CH3, CH2).

### • Préparation du thiol PFPE de formule 1.3

A une solution du thioacétate 3 (9.5 g, 8.2 mmol) dans 300 mL d'EtOH sont ajoutés 40 mL de HCl concentré (10 N). La solution rouge est chauffée à 90°C pendant 2h. Après refroidissement à température ambiante. le mélange est concentré au rotavapor, le résidu est repris dans l'AcOEt (120 mL) puis lavé à l'eau distillée (2 x 50 mL) et enfin à la saumure (40 mL). La phase organique est séchée (MgSO4), filtrée puis concentrée sous vide (rotavapor). Après séchage à la pompe à palettes (chauffage à 50°C), le thiol PFPE (I3) est obtenu sous forme d'une huile orange.
Masse obtenue : 7.9 g
Rendement : 86 %
¹H NMR (270 MHz, acétone-d6) δ (ppm) = 8.51 (s, 1H, CH₂N*H*), 3.38 (m, 2H, C*H*₂NH), 2.50 (t, 2H, CH₂S), 1.72-1.27 (m, 8H, 4 CH₂).
¹³C NMR (acétone-d6) δ (ppm) = 158.5 (d, *J²_{C-F}=* 24.9 Hz, CONH), 124.8-101.2 (m, CFs), 41.1 (CH₂NH), 35.1 (CH₂CH₂SH), 29.7, 28.9, 27.2 (3 CH₂), 25.0 (CH₂SH).

Les autres composés thiols-PFPE sont facilement obtenus selon un mode de synthèse similaire, en utilisant les composés suivants :
- le perfluoro-2,5,8,11-tétraméthyl-3,6,9,12-tétraoxapentadécanoate de méthyle pour obtenir le composé I.1.
- La mercaptoéthylamine et le perfluoro-2,5,8,11-tétraméthyl-3,6,9,12-tétraoxapentadécanoate de méthyle pour obtenir le composé 1.2.
- La mercaptoéthylamine et le perfluoro-2,5,8,11,14-pentaméthyl-3,6,9,12,15-pentaoxaoctadécanoate de méthyle pour obtenir le composé I.4.
- La mercaptoéthylamine et le perfluoro-octanoate de méthyle pour obtenir le composé 1.5.
- Le 10-amino-décan-1-ol et le perfluoro-2,5,8,11,14-pentaméthyl-3,6,9,12,15-pentaoxaoctadécanoate de méthyle pour obtenir le composé I.6.

### 2. Synthèse d'un composé BP-PFPE (par exemple II.1) de formule II selon l'invention :

La molécule II.1 peut être préparée en quatre étapes suivant le schéma de synthèse suivant :

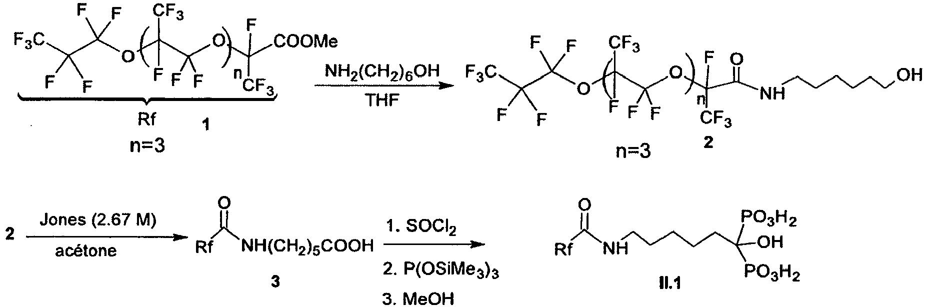

Dans un premier temps, le 6-aminohexan-1-ol est acylé par l'ester méthylique PFPE 1 dans le THF à température ambiante pour conduire à l'amide 2 correspondant. La fonction alcool est ensuite oxydée en acide carboxylique 3 par action du réactif de Jones. Enfin le composé 3 est transformé en acide bisphosphonique **II.1** via un chlorure d'acide.

Le mode opératoire est décrit ci-après :
- Dans un monocol de 50 mL est dissous le 6-aminohexanol (1.25g ; 10.7 mmol) dans 15 mL de THF anhydre sous argon. L'ester méthylique 1 (3g ; 3.56 mmol) est ajouté en une fois. Le mélange biphasique devenu homogène et limpide après quelques minutes est agité à température ambiante pendant 17 heures. Après concentration au rotavapor, le sirop obtenu est repris dans l'AcOEt (25 mL) lavé avec une solution d'acide chlorhydrique 1N puis à l'eau. La phase organique est séchée (MgSO₄), filtrée puis concentrée sous vide (rotavapor puis pompe à palette). On obtient une huile incolore de la molécule **2.**
- L'alcool **2** (3.1 g, 3.3 mmol) est dissous dans 40 mL d'acétone. Une solution 2.67 M du réactif de Jones est ajoutée goutte à goutte. Après 15 minutes d'agitation à température ambiante, quelques gouttes d'isopropanol sont ajoutées puis le mélange est filtré, concentré, repris dans l'AcOEt et lavé deux fois à l'eau. La phase organique est séchée, filtrée puis concentrée sous vide (rotavapor puis pompe à palette). L'acide carboxylique 3 est obtenu sous forme d'une huile incolore.
- L'acide carboxylique **3** (3.1 g ; 3.3 mmol) est mélangé sous argon avec 8 mL de chlorure de thionyle. Le mélange est ensuite chauffé à reflux pendant 45 minutes, puis concentré sous vide. Le sirop obtenu est placé sous argon puis additionné de P(OSiMe₃)₃ (2.5 éq, 2.75 mL). La solution obtenue est agitée sous argon pendant 2h, concentrée sous vide puis additionnée de 10 mL de méthanol. Après 1h d'agitation le mélange est concentré. Le sirop obtenu est lavé à l'eau. La molécule II.1 est ensuite séchée à la pompe à palette.

Les autres composés BP-PFPE sont facilement obtenus selon un mode de synthèse similaire, en utilisant les composés suivants :
- le perfluoro-2,5,8,11,14-pentaméthyl-3,6,9,12,15-pentaoxaoctadécanoate de méthyle pour obtenir le composé II.2.
- le 1H, 1H-perfluoro-3,6,9-trioxadécan-1-ol pour obtenir le composé II.3.
- le 1H,1H,2H,2H-perfluorodécan-1-ol pour obtenir le composé II.4.
- Le 10-amino-décan-1-ol et le perfluoro-2,5,8,11,14-pentaméthyl-3,6,9,12,15-pentaoxaoctadécanoate de méthyle pour obtenir le composé II.5.

### 3. Exemple du procédé de dépôt selon l'invention :

### • Préparation de la solution mélange BP/thiol-PFPE

Pour préparer 50 mL du mélange selon l'invention :
a) Peser 1.09 g du composé BP-PFPE de formule II.1 et le dissoudre dans 25 mL d'alcool isopropylique (IPA).
b) Peser 1.11 g du composé thiol-PFPE de formule I3 et le dissoudre dans 25 mL d'IPA.
c) Mélanger les 2 solutions précédentes dans un erlenmeyer pendant 30 min, filtrer le mélange sur papier filtre si un léger précipité s'est formé. Verser le mélange dans un flacon type Nalgène et stocker à température ambiante à l'abri de la lumière.
d) diluer au vingtième dans l'IPA.

### • Préparation des matériaux

Dégraisser les pièces par un lavage dans un solvant (acétone ou IPA) sous ultrasons pendant 5 minutes puis sécher les pièces sous un flux d'air chaud.

Dans le cas du silicium, une oxydation du matériau est préconisée pour favoriser le greffage. Cette oxydation est réalisée comme suit:
1. La pièce de silicium est immergée dans une solution Piranha (H₂SO₄ conc./H₂O₂ à 30% 3 : 1) fraichement préparée, pendant 45 min,
2. la pièce est rincée trois fois avec de l'eau déionisée,
3. la pièce est séchée pendant 10 minutes dans un four à 80°C.

### • Dépôt

- Placer la ou les pièces dans un récipient de forme adaptée,
- Recouvrir la ou les pièces de la solution de recouvrement (thiol, BP ou mélange BP/thiol PFPE),
- Incuber entre 5 minutes et 360 minutes,
- Éliminer le surnageant / prélèvement de la pièce,
- La pièce est égouttée (centrifugation).

### • Déshydratation - Rinçage

- La pièce qui a reçu le dépôt est placée dans un four à 120°C pendant une période allant de 6 à 15h (seulement pour le rubis et le silicium),
- La pièce est ramenée à température ambiante puis immergée dans l'IPA sous ultrason pendant 2 min,
- séchage de la pièce sous flux d'air chaud.

Les étapes de "dépôt" et de "déshydratation-rinçage" peuvent être répétées.

### 4. Solubilité des composés thiols-PF et BP-PF de l'invention

4.1. La solubilité des molécules thiols-perfluorés, des molécules perfluoro-BP et de mélanges composés de ces deux dernières familles de molécules a été analysée dans quatre solvants :
1) le 3-methoxy-methylbutan-3-ol (MMB),
2) l'acétone (ACE),
3) l'isopropanol (IPA) et
4) le solvant Biosane T212 de la marque MMCC (T212) qui est composé de naphtas hydrotraités.

L'intérêt de ce dernier solvant est qu'il est très volatile et peu inflammable.

La solubilisation des molécules a été réalisée dans les concentrations d'usage, soit entre 10⁻³ et 10⁻⁵ M.

Le procédé employé pour tester la dissolution est le suivant :
- Pour les solvants de l'étude (MMB, ACE et IPA), les composés ont été individuellement dilués dans le solvant sous agitation magnétique à température ambiante, pour obtenir une solution finale ayant des concentrations comprises entre 10⁻³ et 10⁻⁵ M,
- Pour le solvant T212, la dissolution des composés a initialement été réalisée sous agitation magnétique et à température ambiante dans l'isopropanol (IPA) pour obtenir une solution S. Cette solution S a ensuite été diluée à 5% dans les solvants MMCC de telle sorte à obtenir une solution finale ayant des concentrations comprises entre 10⁻³ et 10⁻⁵ M.

Pour chacun de ces essais, les molécules ont été considérées comme dissoutes lorsque les solutions ne présentaient aucun trouble à l'observation. Les résultats des essais sont les suivants :
▪ Toutes les molécules développées sont solubles indépendamment dans le solvant T212 ainsi que dans l'IPA ;
▪ La plupart des molécules thiols-perfluorés et le perfluoro-BP sont solubles dans tous les solvants de l'étude ;
▪ La molécule I.4 est faiblement soluble dans le MMB et l'ACE.

### 4.2 Solubilité des composés BP-PF et thiols-PF dans la composition de l'invention

La solubilité du mélange thiol-bisphosphonate peut être modifiée suivant la longueur de chaine des molécules, leurs concentrations respectives et la nature du solvant utilisé. Tous les mélanges sont solubles dans l'IPA.

### 5. Effet lipophobe de la composition de l'invention

### 5.1. Protocole de dépôt

Différentes surfaces ont été traitées à partir de solutions des molécules thiol 1.3 et II.1. Les solutions sont préparées extemporanément. Les tests ont été réalisés avec des solutions contenant 10⁻³ M de chacune des molécules dissoutes dans de l'IPA. La solution finale a ensuite été déposée sur l'or, le rubis, l'acier 20AP, et sur des alliages de NiP et de SnNi. Le temps de trempage était de 30 minutes, le temps de rinçage de 2 minutes.

L'effet lipophobe a été évalué par mesure des angles de contact d'une huile test de tension superficielle de 33 mN/m sur les différentes surfaces. Toutes les surfaces ont montré un effet lipophobe et hydrophobe important.

### 5.2. Effet hydrophobe et lipophobe sur différents matériaux

### Démonstration de l'effet hydrophobe et lipophobe par mesure des angles de contact

Suivant le procédé de dépôt décrit au paragraphe 3, des matériaux ont été traités par le mélange de la molécule thiol 1.3. avec la molécule BP II.1. Solubilisée dans l'IPA. Les angles de contact ont été mesurés avant et après le traitement de surface.

Les résultats avant et après traitement sont présentés dans les deux tableaux ci-dessous :

**Tableau 1 : angles de contact sur matériaux avant traitement**

| | **Au** | **Rubis** | **Acier** | **NiP** | **SnNi** |
|---|---|---|---|---|---|
| H₂0 | 99.6°±2.1 | 49.7°±7.2° | 97.1°±0.9° | 96.8°±2.0° | 98.3°±1.4° |
| Huile test | 15.3°±2.7° | 24.7°±2.0° | 19.5°±3.7° | 25.6°±2.7° | 35.1°±6.5° |

**Tableau 2 : angles de contact sur matériaux après traitement**

| | **Au** | **Rubis** | **Acier** | **NiP** | **SnNi** |
|---|---|---|---|---|---|
| H₂0 | 111.8°±2.2 | 105.0°±5.2° | 101.7°±2.3° | 110.6°±5.2° | 107.1°±3.0° |
| Huile test | 61.5°±3.5° | 63.6°±1.9° | 61.0°±5.0° | 68.3°±3.9° | 65.5°±3.2° |

### Démonstration de l'effet lipophobe et hydrophobe par mesure des énergies de surface

Les angles de contact, mesurés sur des gouttes d'eau, de glycérol et de diiodométhane sur différents matériaux avant et après traitement, ont permis de calculer les énergies de surfaces selon la méthode d'Owens Wendt.

**Tableau 3 : énergies de surface des matériaux avant traitement**

| [mJ/m²] | **Au** | **Rubis** | **Acier** | **NiP** | **SnNi** |
|---|---|---|---|---|---|
| Energie de surface | 36.0 | 52.6 | 34.1 | 39.3 | 34.3 |
| Composante dispersive | 34.5 | 25.7 | 30.7 | 37.4 | 31.5 |
| Composante polaire | 1.5 | 27.0 | 3.4 | 1.9 | 2.8 |

**Tableau 4: énergies de surface des matériaux après traitement**

| [mJ/m²] | **Au** | **Rubis** | **Acier** | **NiP** | **SnNi** |
|---|---|---|---|---|---|
| Energie de surface | 15.1 | 18.00 | 19.5 | 13.0 | 19.6 |
| Composante dispersive | 13.7 | 16.0 | 18.5 | 12.2 | 18.1 |
| Composante polaire | 1.4 | 2.0 | 1.0 | 0.7 | 1.4 |

### 5.3. Effet du temps de recouvrement

Les deux composés de l'invention I.1 et II.1 ont été mélangés soit à 10⁻³M soit à 10⁻⁴M dans l'IPA et la mise en contact avec l'or a duré 0, 10, 30, 60 ou 360 minutes.

Au regard des résultats présentés dans le tableau ci-dessous, il apparait qu'une étape de recouvrement durant dix minutes suffit pour que la surface soit bien fonctionnalisée. Ce temps sera donc considéré comme avantageux pour réaliser le procédé de l'invention.

**Tableau 5: angles de contact de l'huile test avec les pièces traitées au moyen d'une solution selon l'invention (contenant 10⁻³M du composé I.1 et 10⁻³M du composé II.1 ou 10⁻⁴M du composé I.1 et 10⁻⁴M du composé II.1) en fonction du temps de recouvrement (0, 10, 30, 60 et 360 minutes).**

| temps (min) | 0 | 10 | 30 | 60 | 360 |
|---|---|---|---|---|---|
| 10⁻³M | 25.6±2.7° | 50.4 ± 8.8° | 60.8 ± 5.8° | 63.2 ± 3.7° | 76.4 ± 0.6° |
| 10⁻⁴M | 25.6 ± 2.7° | 36.6 ± 11.1° | 54.4 ± 4.7° | 55.7 ± 7.7° | 68.9 ± 2.5° |

### 6. Effet de la concentration du composé de formule I et II

Afin d'évaluer les propriétés lipophobes et hydrophobe des mélanges Thiol/BP, un recouvrement de différents matériaux par trempage de ces molécules en solution dans l'IPA pendant 30 minutes suivies d'un rinçage à l'IPA pendant deux minutes sous ultrasons (US) a été réalisé.

Les mélanges testés sont les suivants :

| Mélange n° | Thiol PFPE (1.3) | Bisphosphonate PFPE (II.1) |
|---|---|---|
| 1 | 10⁻³M | 10⁻³M |
| 2 | 10⁻⁴M | 10⁻³M |
| 3 | 10⁻³M | 10⁻⁴M |

La molécule 1.3 a été choisie pour la suite de l'étude, vu que les angles de contact obtenus pour cette molécule sont les plus élevés. Néanmoins, les autres molécules permettent aussi d'obtenir des couches fonctionnelles avec un effet lipophobe et hydrophobe satisfaisant.

Les résultats obtenus sont présentés sous forme d'un angle de contact d'une goutte d'eau, respectivement une goutte d'une huile test, sur différents matériaux.

**Tableau 6 : angles de contact de gouttes d'eau, respectivement d'huile test, avec des pièces en laiton doré (Au), en rubis, en acier 20AP, en NiP et sur un revêtement SnNi en fonction du temps de trempage dans une solution selon l'invention (mélange des composés 1.3 et II.1 à 10⁻³M).**

| Temps | Liquide | **Au** | **Rubis** | **Acier** | **NiP** | **SnNi** |
|---|---|---|---|---|---|---|
| 0 min. | H₂O | 99.6 ± 2.1° | 49.7 ± 7.2° | 97.1 ± 0.9° | 96.8 ± 2.0° | 98.3 ± 1.4° |
| 0 min. | Huile test | 25.6 ± 2.7° | 24.7 ± 2.0° | 19.5 ± 3.7° | 15.3 ± 2.7° | 35.1 ± 6.5° |
| 5 min. | H₂O | 115.5 ± 1.7° | 106.4 ± 1.7° | 102.3 ± 2.5° | 112.4 ± 2.3° | 104.7 ± 3.6° |
| 5 min. | Huile test | 68.9 ± 3.5° | 72.5 ± 7.5° | 58.5 ± 7.1° | 70.7 ± 5.3° | 63.9 ± 2.9° |
| 10 min. | H₂O | 117.0 ± 2.8° | 108.0 ± 1.4° | 103.2 ± 1.6° | 114.0 ± 1.4° | 104.8± 1.2° |
| 10 min. | Huile test | 68.6 ± 4.1° | 70.3 ± 3.3° | 63.3 ± 2.6° | 75.5 ± 3.1° | 62.6 ± 4.1° |
| 30 min. | H₂O | 112.3 ± 3.6° | 105.7 ± 4.7° | 110.8 ± 0.3° | 103.9 ± 1.0° | 108.1 ± 4.0° |
| 30 min. | Huile test | 65.6 ± 1.9° | 71.8 ± 1.4° | 68.3 ± 5.6° | 73.1 ± 6.4° | 73.6 ± 4.6° |

Sur le tableau 6, il apparait que la solution testée donnant les meilleurs résultats est le mélange n°1 comprenant un mélange de 50% de la molécule 1.3 (à 10⁻³ M) et 50% de bisphosphonate II.1 (à 10⁻³M).

La proportion de chacune des molécules dans le mélange a une certaine influence sur la qualité du traitement de surface, mais tous les mélanges et les différentes molécules thiols et BP testées permettent d'obtenir une couche autoassemblée avec les propriétés d'oléophobicité requises pour une application anti-trace de doigt, antiadhésive, anticontamination.

Il est également possible de réaliser plusieurs dépôts successifs sur le même composant, avec rinçage intermédiaire.

### 7. Résistance aux lavages

La résistance des couches de l'invention a été évaluée après 1 ou plusieurs cycles de lavages par mesure des angles de contact avec H₂O et l'huile test. Une bonne tenue sur les différents matériaux évalués a été observée, même après plusieurs cycles de lavage. Par ailleurs, la résistance au lavage avec des produits à base de détergents fortement alcalins comme le «Rubisol» pour l'or a été testée, et montré que les propriétés lipophobes et hydrophobes sur l'or résistent bien au lavage Rubisol (angle huile supérieur à 30°).

### 8. Effet lipophobe et hydrophobe des différentes molécules PF thiols 1.1-1.5 seules

A partir de la cinétique réalisée sur la molécule I.1, les paramètres suivants ont été testés pour tester les 4 autres molécules thiols-PF et thiols-PFPE (I.2, I.3, I.4, I.5) :
Concentration : 10⁻³M pour chaque composé I.1 à 1.5
Solvant : alcool isopropylique (IPA) ou Biosane T212 (MMCC)
Temps de trempage : 30'
Temps de rinçage : 2' sous ultrasons
Séchage : air chaud

L'évaluation des propriétés de la couche fonctionnelle a été réalisée par mesure des angles de contact entre la surface du métal et la goutte d'huile. Les résultats sont présentés au tableau ci-dessous. Il est notable que la concentration de 10⁻³M donne un angle supérieur à 45° pour toutes les molécules I.1 à 1.5.

**Tableau 7 : angle de contact de pièce en laiton doré avec l'huile test, en fonction du solvant (MMCC ou IPA) et de la molécule de recouvrement I.1-I.5 utilisée à 10⁻³M).**

| | **IPA** | **MMCC** |
|---|---|---|
| Référence | 25.6 ± 2.7° | |
| I.1 | 60.8 ± 5.8° | 64.5 ± 2.9° |
| I.2 | 48.5 ± 4.3° | 72.6 ± 1.6° |
| I.3 | 75.7 ± 6° | 63.8 ± 2.8° |
| I.4 | 69.9 ± 2.9° | 68.9 ± 2.5° |
| I.5 | 67.6 ± 3.6° | 49.5 ± 2.5° |

Les différentes molécules montrent par ailleurs une bonne résistance au lavage de type « Rubisol » quand la couche est réalisée avec une solution concentrée à 10⁻³M de I.1 à 1.5.

L'effet pour la molécule I.3 est significativement supérieur à celui d'une surface référence non traitée (test de student, p < 0.02)

L'efficacité meilleure pour la molécule 1.3 est la combinaison de sa solubilité, de son efficacité hydrophobe et lipophobe, et de sa résistance aux lavages.

### 9. Effet hydrophobe et lipophobe de molécules thiols et bisphosphonates, et de leurs mélanges

L'effet hydrophobe et lipophobe de molécules thiols et bisphosphonates a été testé pour des molécules seules, puis pour leurs mélanges, afin de mettre en évidence l'effet synergique produit par la combinaison des deux types de molécules.

Les molécules thiols suivantes ont été testées :
1.3 : 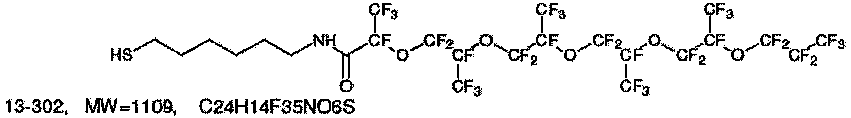
I.6:

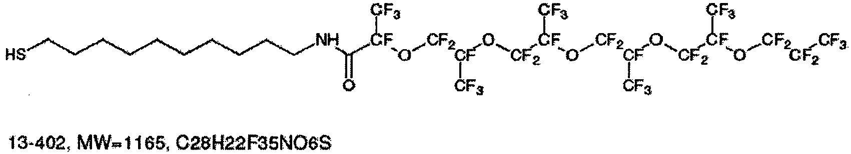

La molécule 1.3 correspond à la molécule étudiée aux exemples 1 et 3 ci-dessus. La molécule 13-402 (1.6.) possède un groupement aliphatique plus long.

Les molécules bisphosphonates suivantes ont été testées :

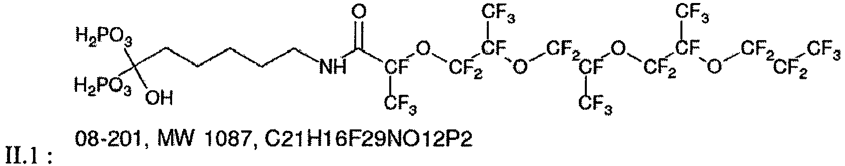

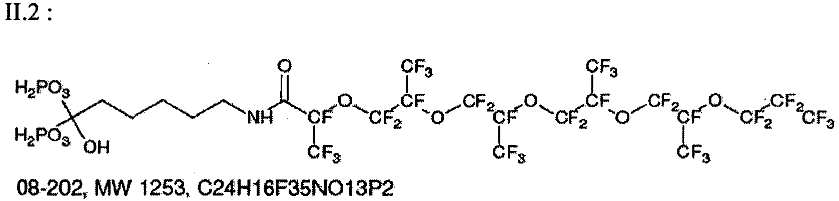

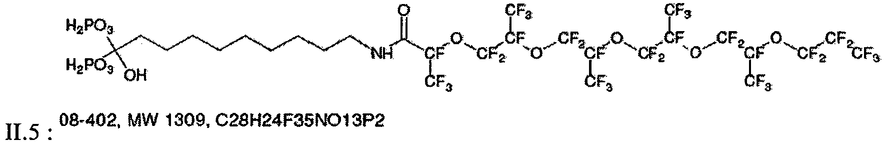

Toutes les molécules ont été synthétisées dans des quantités de l'ordre du gramme avec des rendements satisfaisants. La pureté de chacun des composés est supérieure à 90%.

### Propriété des molécules thiol et bisphosphonate seules

Les propriétés des molécules thiol et bisphosphonates isolées ont été mesurées sur des surfaces d'acier et des substrats dorés à l'aide de solutions à 10⁻³ M dans de l'isopropanol, selon le protocole détaillé à l'exemple 3 ci-dessus. Les résultats obtenus sont les suivants :

**Tableau 8 : angle de contact de pièces en laiton doré et en acier avec de l'eau et l'huile test, pour des molécules de recouvrement utilisées à 10⁻³M dans de l'IPA.**

| **Molécule** | **Au** | **Au** | **Acier** | **Acier** |
|---|---|---|---|---|
| | **H₂O** | **Huile test** | **H₂O** | **Huile test** |
| **II.1 BP** | 101.3 | 51.7 | 98.6 | 47.3 |
| **II.2 BP** | 109.4 | 66.2 | 105.1 | 61.7 |
| **I.3 thiol** | 96.4 | 69.0 | 70.2 | 33.5 |
| **I.6 thiol** | 97.9 | 71.0 | 74.1 | 34.4 |

Les écarts-type sur trois mesures sont compris entre 1° et 5°. On remarque que les deux types de molécules permettent de fonctionnaliser valablement les substrats dorés, mais que les thiols seuls ne se fixent pas (ou peu) sur l'acier.

### Combinaison de molécules thiol et bisphosphonate

Les mélanges testés sont au nombre de six ; pour le mélange 0 (I.3/II.1), il convient de se référer à l'exemple 6 ci-dessus.

**Tableau 9 : Solutions de traitement selon l'invention testées dans le cadre de l'exemple 9 (mélange des composés thiols I.3 et 1.6 avec des composés bisphosphonates II.1, II.2 et II.5 à 10⁻³M et 10⁻⁴M dans de l'IPA)**

| **Molécule** | **II**.**1** | **II.2** | **II.5** |
|---|---|---|---|
| **1.3** | Mélange 1 | Mélange 4 | Mélange 5 |
| **1.6** | Mélange 6 | Mélange 7 | Mélange 8 |

La solubilité a été qualifiée par observation de la limpidité des solutions au moment de leur mélange dans l'isopropanol, après 1h et 24h. Les concentrations testées sont de 10⁻³ M et 10⁻⁴ M pour chacune des molécules. Dans toutes ces configurations, aucune perte de solubilité n'a été mise en évidence.

Le tableau suivant détaille les résultats obtenus :

**Tableau 10 : angle de contact de gouttes d'eau, respectivement d'huile test, avec des pièces en laiton doré, en acier et en rubis revêtues par trempage dans une solution de traitement selon l'invention (mélanges 1 et 4 à 8, selon le tableau 9, à 10⁻³M dans de l'IPA)**

| **Mélange de Molécules** | **Au** | **Au** | **Acier** | **Acier** | **Rubis** | **Rubis** |
|---|---|---|---|---|---|---|
| | **H₂0** | **Huile test** | **H₂0** | **Huile test** | **H₂0** | **Huile test** |
| **Mélange 1** | 112 | 64 | 103 | 68 | 105 | 64 |
| **Mélange 4** | 111 | 68 | 106 | 73 | 106 | 76 |
| **Mélange 5** | 111 | 82 | 110 | 74 | 112 | 71 |
| **Mélange 6** | 101 | 80 | 104 | 45 | 114 | 69 |
| **Mélange 7** | 112 | 81 | 107 | 69 | 113 | 71 |
| **Mélange 8** | 112 | 79 | 109 | 70 | 114 | 76 |

On constate tout d'abord que la fonctionnalité lipophobe/hydrophobe est bonne pour tous les mélanges, avec un angle de contact toujours supérieur à 60° avec l'huile test et toujours supérieur à 100° avec de l'eau.

Il n'y a pas d'effet important de la concentration sur les propriétés hydrophobes et oléophobes, bien que les résultats soient généralement meilleurs pour une concentration de 10⁻³ M.

La comparaison des résultats obtenus avec les mélanges et les molécules seules permet de dégager les enseignements suivants : sur les surfaces dorées, les angles de contact mesurés sont comparables pour des molécules seules et pour des mélanges. L'utilisation d'un mélange permet par contre d'améliorer significativement la tenue dans le temps, et en particulier la tenue aux lavages, par rapport à une molécule seule. Ceci peut être expliqué par le fait que l'or est un métal noble qui ne présente pas de groupement oxydé en surface, ce qui fait que le pied d'accroche BP a peu de faculté à se fixer de façon durable sur la surface. Il convient aussi de noter qu'un mélange permet d'obtenir une meilleure tenue aux lavages qu'une molécule thiol seule, et que la combinaison des deux molécules donne un effet inattendu. Sur l'acier, les angles de contact après dépôt sont plus faibles pour les molécules seules que pour les mélanges. De plus, les mélanges résistent nettement mieux aux lavages que les molécules utilisées seules.

Les résultats obtenus pour des mélanges de molécules sont meilleurs que lorsque ces molécules sont utilisées seules. Les mélanges de ces deux familles de molécules sont donc clairement plus avantageux que ces mêmes molécules utilisées seules, même pour des surfaces où l'une des molécules est censé avoir un effet négligeable (par exemple l'Au pour les molécules BP), témoignant d'un effet synergique inattendu.

Cet effet synergique entre les molécules thiol et bisphosphonate favorise leur adhésion sur les matériaux lorsqu'elles sont en mélange. Il pourrait s'expliquer par un arrangement entre les différents groupements chimiques de ces molécules qui permet de présenter les groupements réactifs sur la surface du matériau de façon préférentielle.

### Références bibliographiques

Lecollinet G. et al., Langmuir, 2009, 25 (14), pp 7828-7835.
Bonard J.-M., Actes du Congrès International de Chronométrie 2004, p. 131, 2004
Bain C.D. et al, J. Am. Chem Soc, 111(1), 321-335, 1989
Colorado R. et al, Langmuir 2003, 19 (8), 3288-3296
Folkers et al., Langmuir, (1995) 11, 813-824
Fukushima H. et al, J. of Phys Chem b 2000, 104, (31), 7417-7423
Massin M, Actes du congrès des Sociétés Allemande et Française de Chronométrie, p. 95 (1971).
Osowiecki M., Bulletin de la Société Suisse de Chronométrie SSC III, p. 735 (1957).
Renaud P. et al., Bulletin de la Société Suisse de Chronométrie III, p.681 (1956)
Shi C. et al, J. Supercriti. Fluids 2000, 17, 81-90
Saunders et al, J. Phys Chem B 2004, 108, (41), 15969-15975

## Revendications

1. Composition comprenant au moins un composé thiol et au moins un composé bisphosphonique ou un de leurs sels, **caractérisée en ce que** le composé thiol est de formule :
HS-A-B-C
Dans laquelle :
A est un groupement (CH2)ₘ-X- , m étant un entier compris entre 0 à 100, et X étant un groupement alkyle en C₀-C₁₀₀ saturé ou non, perfluoré ou partiellement fluoré, la chaîne alkyle pouvant être substituée ou interrompue par 0 à 10 groupements cycloalkyle ou aryle pouvant être perfluorés ou non ;
B est
a) une liaison chimique simple, ou un atome O, S, ou un groupement S(CO), (CO)S, ou NR, (CO)NR, NR(CO), R étant un atome d'hydrogène ou un alkyle en C₁-C₁₀,
b) 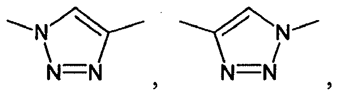 et
C est choisi parmi : F(CF(CF₃)CF₂O)ₙ CF(CF₃)-, F(CF₂ CF(CF₃)O)ₙCF₂CF₂-, F(CF₂CF₂CF₂O)ₙ CF₂CF₂-₋, F(CF₂CF₂O)ₙCF₂-, et CₚF₂ₚ₊₁-, dans lesquels n et p sont des entiers compris entre 1 et 100,
et le composé bisphosphonique est de formule : 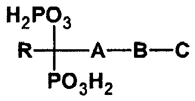 Dans laquelle :
**R** est un atome d'hydrogène H ou un groupement OH,
**A** est un groupement (CH₂)ₘ-X-,m étant un entier compris entre 0 et 100, X étant un groupement alkyle en C₀-C₁₀₀ saturé ou non, perfluoré ou partiellement fluoré, la chaîne alkyle pouvant être substituée ou interrompue par 0 à 10 groupements cycloalkyl ou aryle pouvant être perfluorés ou non ;
**B** est
a) une liaison chimique simple, ou un atome O, S, ou un groupement S(CO), (CO)S, ou NR, (CO)NR, NR(CO), R étant un atome d'hydrogène ou un alkyle en C₁-C₁₀,
b) 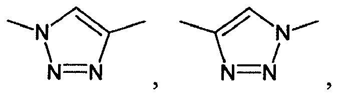
et
**C** est choisi parmi : F(CF(CF₃)CF₂O)ₙ CF(CF₃)-, F(CF₂CF(CF₃)O)nCF₂CF₂-, F(CF₂CF₂CF₂O)ₙ CF₂CF₂-₋, F(CF₂CF₂O)ₙCF₂-, et CₚF₂ₚ₊₁-, dans lesquels n et p sont des entiers compris entre 1 et 100.

2. Composition selon la revendication 1, **caractérisée en ce que** ledit composé thiol est un composé thiol-perfluoré de formule I suivante : 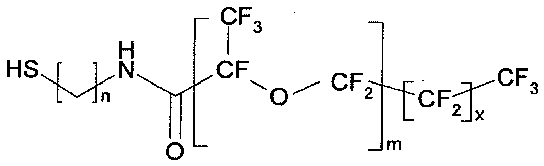 dans laquelle: n est un entier compris entre 1 et 100, m est un entier compris entre 1 et 100, et x est un entier compris entre 1 et 10.

3. Composition selon les revendications 1 ou 2, **caractérisée en ce que** ledit composé bisphosphonique est un composé bisphosphonique perfluoré de formule II suivante : 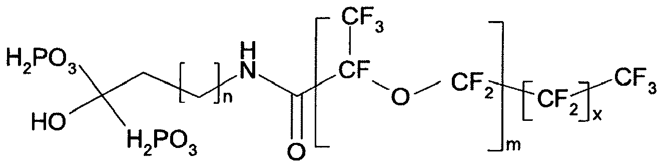 dans laquelle: n est un entier compris entre 1 et 100, m est un entier compris entre 1 et 100, et x est un entier compris entre 1 et 10.

4. Composition selon l'une quelconque des revendications 2 ou 3, **caractérisée en ce que** ledit composé thiol-perfluoré est un composé de formule I dans laquelle n=6, m=4, et x=1, ou n=2, m=4, et x=1, ou n=10, m=5 et x=1, ou n=6, m=5, et x=1, ou n=2, m=5, de préférence n=6, m=5, et x=1, et ledit composé bisphosphonique perfluoré est un composé de formule II dans laquelle n=4, m=4, et x=1, ou n=8, m=5 et x=1.

5. Composition selon l'une quelconque des revendications 1 à 4, **caractérisée en ce que** lesdits composés bisphosphoniques et thiols sont dissous dans un solvant organique choisi parmi les solvants alcooliques, en particulier les alcools en C₁ à C₆, tels que l'isopropanol, l'éthanol, le méthanol, les aldéhydes, les cétones tels que l'acétone, des éthers tels que le diéthyléther ou le tétrahydrofurane ou les alcanes, notamment des alcanes en C₁ à C₈, ainsi que leurs mélanges, ou dans un solvant composé de naphtas hydrotraités en mélange avec de l'isopropanol ou de l'acétone.

6. Utilisation d'une composition telle que définie dans les revendications 1 à 5, pour augmenter l'hydrophobicité et/ou la lipophobicité d'une surface métallique.

7. Utilisation d'une composition telle que définie dans les revendications 1 à 5, pour limiter la corrosion d'une surface métallique.

8. Utilisation d'une composition telle que définie dans les revendications 1 à 5, pour limiter le dépôt de salissure et/ou la contamination microbiologique sur une surface métallique.

9. Utilisation d'une composition telle que définie dans les revendications 1 à 5, pour lubrifier une surface métallique.

10. Utilisation selon l'une quelconque des revendications 6 à 9, dans laquelle ladite surface métallique est constituée à plus de 50 % :
- de métaux nobles choisis parmi l'or, le platine, l'argent et le cuivre,
- de métaux oxydés choisis parmi le fer, le titane, l'aluminium, le rubis, le saphir, le nickel, le ruthénium, le rhodium et l'étain,
- d'alliages choisis parmi l'acier, acier inoxydable, laiton, maillechort, bronze, étain-nickel, nickel-phosphore, cuivre-bérylium, palladium-nickel, cuivre-cobalt, ou d'alliages comprenant du vanadium, du chrome, du manganèse, du zinc, du tungstène, ou du zirconium, ou autre alliage amorphe, ou
- de céramiques, ou
- de semi-conducteurs comme le silicium ou le germanium, ainsi que leurs oxydes, ou encore de diamant.

11. Procédé de recouvrement d'une surface métallique par une couche moléculaire de fonctionnalisation, **caractérisé en ce qu'**il comprend au moins les étapes suivantes :
a) dégraissage éventuel de la surface par un lavage dans un solvant puis séchage,
b) oxydation éventuelle de la surface de façon à disposer les fonctions hydroxyles à la surface du substrat,
c) mise en contact de la surface avec une composition définie aux revendications 1 à 5, jusqu'à autoassemblage des composés thiols et/ou bisphosphoniques en une monocouche recouvrant ladite surface,
d) élimination du surnageant,
e) déshydratation éventuelle de la surface ainsi recouverte,
f) rinçage de la surface fonctionnalisée,
g) séchage de la surface fonctionnalisée.

12. Procédé selon la revendication 11, **caractérisé en ce que** ladite surface métallique est constituée à plus de 50 % :
- de métaux nobles choisis parmi l'or, le platine, l'argent et le cuivre,
- de métaux oxydés choisis parmi le fer, le titane, l'aluminium, le rubis, le saphir, le nickel, le ruthénium, le rhodium et l'étain,
- d'alliages choisis parmi l'acier, acier inoxydable, laiton, maillechort, bronze, étain-nickel, nickel-phosphore, cuivre-bérylium, palladium-nickel, cuivre-cobalt, ou d'alliages comprenant du vanadium, du chrome, du manganèse, du zinc, du tungstène, ou du zirconium, ou autre alliage amorphe, ou
- de céramiques, ou
- de semi-conducteurs comme le silicium ou le germanium, ainsi que leurs oxydes, ou encore de diamant.

13. Utilisation d'une surface fonctionnalisée obtenue selon le procédé défini aux revendications 11 et 12 pour dans la fabrication de flacons et/ou bouchons destinés à l'industrie cosmétique, pharmaceutique, en parfumerie ou dans l'industrie du luxe, dans des pièces de micromécanique ou de microélectronique.

## Patentansprüche

1. Zusammensetzung, die mindestens eine Thiol-Komponente und mindestens eine Biphosphon-Komponente oder eines ihrer Salze umfasst, **dadurch gekennzeichnet, dass** die Thiol-Komponente die Formel hat:
HS-A-B-C
wobei:
A eine Gruppe (CH₂)ₘ-X- ist, wobei m eine Ganzzahl zwischen 0 bis 100 inklusive ist und X eine gesättigte oder nicht, perfluorierte oder teilweise fluorierte C₀-C₁₀₀-Alkylgruppe ist, wobei die Alkylkette von 0 bis 10 Cycloalkyl- oder Arylgruppen, die perfluoriert sein können oder nicht, substituiert oder unterbrochen sein kann,
**B**
a) eine einfache chemische Bindung oder ein Atom O, S oder eine Gruppe S(CO), (CO)S oder NR, (CO)NR, NR(CO) ist, wobei R ein Wasserstoffatom oder ein C₁-C₁₀-Alkyl ist,
b) 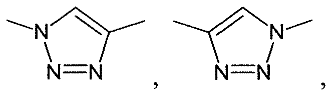 und
C ausgewählt ist aus: F(CF(CF₃)CF₂O)"CF(CF₃)-, F(CF₂CF(CF₃)O)ₙCF₂CF₂-, F(CF₂CF₂CF₂O)ₙCF₂CF₂-, F(CF₂CF₂O)ₙCF₂-und CₚF₂ₚ₊₁-, wobei n und p Ganzzahlen zwischen 1 und 100 inklusive sind,
und die Biphosphon-Komponente die Formel hat: 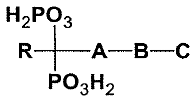 wobei:
**R** ein Wasserstoffatom H oder eine Gruppe OH ist,
**A** eine Gruppe (CH₂)ₘ-X- ist, wobei m eine Ganzzahl zwischen 0 und 100 inklusive ist, wobei X eine gesättigte oder nicht, perfluorierte oder teilweise fluorierte C₀-C₁₀₀-Alkylgruppe ist, wobei die Alkylkette von 0 bis 10 Cycloalkyl- oder Arylgruppen, die perfluoriert sein können oder nicht, substituiert oder unterbrochen sein kann,
**B**
a) eine einfache chemische Bindung oder ein Atom O, S oder eine Gruppe S(CO), (CO)S oder NR, (CO)NR, NR(CO) ist, wobei R ein Wasserstoffatom oder ein C₁-C₁₀-Alkyl ist,
b) 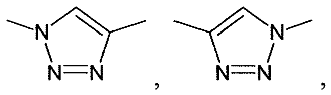
und
**C** ausgewählt ist aus: F(CF(CF₃)CF₂O)ₙCF(CF₃)-, F(CF₂CF(CF₃)O)nCF₂CF₂-, F(CF₂CF₂CF₂O)ₙCF₂CF₂-, F(CF₂CF₂O)ₙCF₂-und CₚF₂ₚ₊₁-, wobei n und p Ganzzahlen zwischen 1 und 100 inklusive sind.

2. Zusammensetzung nach Anspruch 1, **dadurch gekennzeichnet, dass** die Thiol-Komponente eine Thiol-perfluorierte Komponente der folgenden Formel I ist: 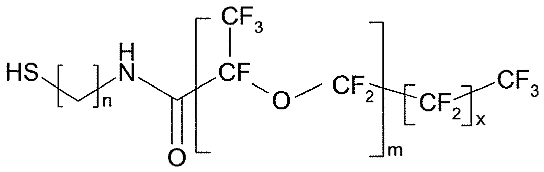 wobei n eine Ganzzahl zwischen 1 und 100 inklusive ist, m eine Ganzzahl zwischen 1 und 100 inklusive ist und x eine Ganzzahl zwischen 1 und 10 inklusive ist.

3. Zusammensetzung nach den Ansprüchen 1 oder 2, **dadurch gekennzeichnet, dass** die Biphosphon-Komponente eine Biphosphon-perfluorierte Komponente der folgenden Formel II ist: 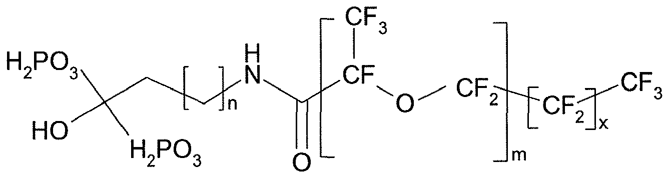 wobei: n eine Ganzzahl zwischen 1 und 100 inklusive ist, m eine Ganzzahl zwischen 1 und 100 inklusive ist und x eine Ganzzahl zwischen 1 und 10 inklusive ist.

4. Zusammensetzung nach einem der Ansprüche 2 oder 3, **dadurch gekennzeichnet, dass** die Thiol-perfluorierte Komponente eine Komponente der Formel I ist, wobei n=6, m=4 und x=1 oder n=2, m=4 und x=1 oder n=10, m=5 und x=1 oder n=6, m=5 und x=1 oder n=2, m=5, vorzugsweise n=6, m=5 und x=1, ist und die Biphosphon-perfluorierte Komponente eine Komponente der Formel II ist, wobei n=4, m=4 und x=1 oder n=8, m=5 und x=1 ist.

5. Zusammensetzung nach einem der Ansprüche 1 bis 4, **dadurch gekennzeichnet, dass** die Biphosphon- und Thiol-Komponenten in einem organischen Lösungsmittel gelöst sind, das aus den alkoholischen Lösungsmitteln ausgewählt ist, insbesondere den C₁- bis C₆-Alkoholen, wie dem Isopropanol, dem Ethanol, dem Methanol, den Aldehyden, den Ketonen wie dem Aceton, den Ethern wie dem Diethylether oder dem Tetrahydrofuran oder den Alkanen, insbesondere den C₁- bis C₈-Alkanan, sowie ihren Gemischen, oder in einem Lösungsmittel, das sich aus wasserbehandelten Naphthaten gemischt mit Isopropanol oder Aceton, zusammensetzt.

6. Verwendung einer Zusammensetzung nach den Ansprüchen 1 bis 5 zur Erhöhung der Hydrophobiztität und/oder die Lipophobizität einer metallischen Oberfläche.

7. Verwendung einer Zusammensetzung nach den Ansprüchen 1 bis 5 zur Begrenzung der Korrosion einer metallischen Oberfläche.

8. Verwendung einer Zusammensetzung nach den Ansprüchen 1 bis 5 zur Begrenzung des Absetzens von Schmutz und/oder der mikrobiologischen Kontaminierung auf einer metallischen Oberfläche.

9. Verwendung einer Zusammensetzung nach den Ansprüchen 1 bis 5 zum Schmieren einer metallischen Oberfläche.

10. Verwendung nach einem der Ansprüche 6 bis 9, wobei die metallische Oberfläche zu mehr als 50 % besteht aus:
- Edelmetallen, ausgewählt aus dem Gold, dem Platin, dem Silber und dem Kupfer,
- oxidierten Metallen, ausgewählt aus dem Eisen, dem Titan, dem Aluminium, dem Rubin, dem Saphir, dem Nickel, dem Ruthenium, dem Rhodium und dem Zinn,
- Legierungen, ausgewählt aus dem Stahl, dem rostfreien Stahl, Messing, Neusilber, Bronze, Zinn-Nickel, Nickel-Phosphor, Kupfer-Beryllium, Palladium-Nickel, Kupfer-Kobalt, oder Legierungen, die Vanadium, Chrom, Mangan, Zink, Wolfram oder Zirkonium enthalten, oder einer anderen amorphen Legierung, oder
- Keramiken, oder
- halbleitenden Materialien wie dem Silizium oder dem Germanium sowie ihren Oxiden oder auch Diamant.

11. Verfahren zur Beschichtung einer metallischen Oberfläche mit einer molekularen Funktionalisierungsschicht, **dadurch gekennzeichnet, dass** es mindestens die folgenden Schritte umfasst:
a) eventuelles Entfetten der Oberfläche durch Waschen in einem Lösungsmittel mit anschließendem Trocknen,
b) eventuelle Oxidation der Oberfläche derart, dass Hydroxylfunktionen auf die Oberfläche des Substrats aufgebracht werden,
c) Inkontaktversetzen der Oberfläche mit einer Zusammensetzung nach den Ansprüchen 1 bis 5 bis zur Selbstassemblierung der Thiol-und/oder Biphosphon-Komponenten in einer die Oberfläche bedeckenden Einfachschicht,
d) Entfernen des Überstands,
e) eventuelles Dehydrieren der derart bedeckten Oberfläche,
f) Abspülen der funktionalisierten Oberfläche,
g) Trocknen der funktionalisierten Oberfläche.

12. Verfahren nach Anspruch 11, **dadurch gekennzeichnet, dass** die metallische Oberfläche zu mehr als 50 % besteht aus:
- Edelmetallen, ausgewählt aus dem Gold, dem Platin, dem Silber und dem Kupfer,
- oxidierten Metallen, ausgewählt aus dem Eisen, dem Titan, dem Aluminium, dem Rubin, dem Saphir, dem Nickel, dem Ruthenium, dem Rhodium und dem Zinn,
- Legierungen, ausgewählt aus dem Stahl, dem rostfreien Stahl, Messing, Neusilber, Bronze, Zinn-Nickel, Nickel-Phosphor, Kupfer-Beryllium, Palladium-Nickel, Kupfer-Kobalt, oder Legierungen, die Vanadium, Chrom, Mangan, Zink, Wolfram oder Zirkonium enthalten, oder einer anderen amorphen Legierung, oder
- Keramiken, oder
- halbleitenden Materialien wie dem Silizium oder dem Germanium sowie ihren Oxiden oder auch Diamant.

13. Verwendung einer nach dem Verfahren nach den Ansprüchen 11 und 12 hergestellten funktionalisierten Oberfläche bei der Herstellung von Flakons und/oder Verschlüssen, die für die kosmetische, pharmazeutische Industrie bestimmt sind, in der Parfümerie oder in der Luxusindustrie, bei Teilen der Mikromechanik oder der Mikroelektronik.

## Claims

1. Composition comprising at least one thiol compound and at least one bisphosphonic compound or a salt thereof, **characterized in that** said thiol compound has the formula:
HS**-A-B-C**
wherein:
**A** is a (CH₂)ₘ-X- group, m being an integer between 0 and 100, and X being a saturated or unsaturated C₀-C₁₀₀ alkyl group, perfluorinated or partially fluorinated, the alkyl chain possibly being substituted or interrupted by 0 to 10 cycloalkyl or aryl groups that may be perfluorinated or not;
**B** is
a) a single chemical bond, or an O, S atom or an S(CO),(CO)S or NR, (CO)NR, NR(CO) group, R being a hydrogen atom or a C₁-C₁₀ alkyl,
b) 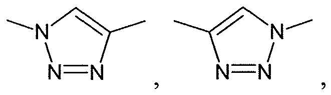 and
**C** is chosen from among: F(CF(CF₃)CF₂O)ₙCF(CF₃)-, F(CF₂CF(CF₃)O)ₙCF₂CF₂-, F(CF₂CF₂CF₂O)ₙCF₂CF₂-, F(CF₂CF₂O)ₙCF₂- and CₚF₂ₚ₊₁-, wherein n and p are integers between 1 and 100,
and the bisphosphonic compound has the formula: 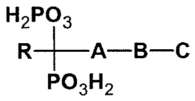
wherein
**R** is a hydrogen atom H or OH group,
**A** is a (CH₂)ₘ-X- group, m being an integer between 0 and 100, X being a saturated or unsaturated C₀-C₁₀₀ alkyl group, perfluorinated or partially fluorinated, the alkyl chain possibly being substituted or interrupted by 0 to 10 cycloalkyl or aryl groups that may be perfluorinated or not;
**B** is
a) a single chemical bond, or an O, S atom or an S(CO), (CO)S or NR, (CO)NR, NR(CO) group, R being a hydrogen atom or C₁-C₁₀ alkyl,
b) 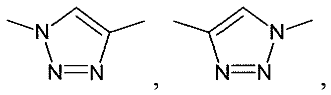
and
**C** is chosen from among: F(CF(CF₃)CF₂O)ₙCF(CF₃)-, F(CF₂CF(CF₃)O)ₙCF₂CF₂-, F(CF₂CF₂CF₂O)ₙCF₂CF₂-, F(CF₂CF₂O)ₙCF₂- and CₚF₂ₚ₊₁-, wherein n and p are integers between 1 and 100.

2. Composition according to claim 1, **characterized in that** said thiol compound is a perfluorinated thiol of the following formula I: 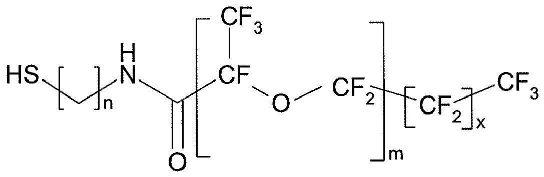 wherein: n is an integer from 1 to 100, m is an integer from 1 to 100 and x is an integer between 1 and 10.

3. Composition according to claims 1 or 2, **characterized in that** said bisphosphonic compound is a perfluorinated bisphosphonic of the following formula II: 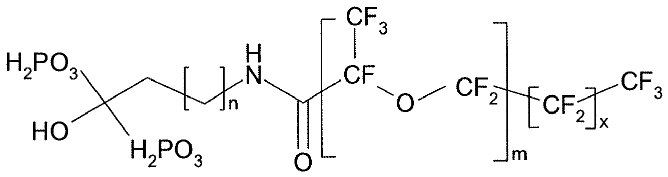 wherein: n is an integer between 1 and 100, m is an integer between 1 and 100, and x is an integer between 1 and 10.

4. Composition according to any one of claims 2 or 3, **characterized in that** said perfluorinated thiol compound is a compound of formula I, wherein n=6, m=4, and x=1, or n=2, m=4 and x=1, or n=10, m=5, and x=1, or n=6, m=5 and x=1, or n=2, m=5, preferably n=6, m=5, and x=1, and said perfluorinated bisphosphonic compound is a compound of formula II wherein n=4, m=4 and x=1 or n=8, m=5, and x=1.

5. Composition according to any one of claims 1 to 4, **characterized in that** said bisphosphonic and thiol compounds are dissolved in an organic solvent chosen from alcohol solvents, especially C₁ to C₆ alcohols such as isopropanol, ethanol, methanol, aldehydes, ketones such as acetone, ethers such as diethyl ether or tetrahydrofuran or alkanes, in particular C₁ to C₈ alkanes as well as mixtures thereof, or in a solvent consisting of hydrotreated naphthas mixed with isopropanol or acetone.

6. Use of the composition as defined in claims 1 to 5 to increase the hydrophobicity and/or the lipophobicity of a metal surface.

7. Use of the composition as defined in claims 1 to 5 to limit the corrosion of a metal surface.

8. Use of the composition as defined in claims 1 to 5 to limit dirt deposits and/or microbial contamination of a metal surface.

9. Use of the composition as defined in claims 1 to 5 to lubricate a metal surface.

10. Use according to any one of claims 6 to 9, wherein said metal surface consists of over 50% of:
- noble metals selected from gold, platinum, silver and copper,
- oxidised metals selected from iron, titanium, aluminium, ruby, sapphire, nickel, ruthenium, rhodium and tin,
- alloys selected from steel, stainless steel, brass, nickel-silver, bronze, tin-nickel, nickel-phosphorus, copper-beryllium, palladium-nickel, copper-cobalt, or alloys containing vanadium, chromium, manganese, zinc, tungsten or zirconium, or another amorphous alloys, or
- ceramics, or
- semi-conductors such as silicon or germanium as well as oxides thereof or even diamond.

11. Method for coating a metal surface with a molecular functionalisation layer, **characterized in that** it comprises at least the following steps:
a) optionally degreasing the surface by washing with a solvent and then drying,
b) optionally oxidising the surface so as to create hydroxyl groups at the surface of the substrate,
c) contacting the surface with a composition defined in claims 1 to 5, up to the point of self-assembly of thiol and/or bisphosphonic compounds in a single layer coating said surface,
d) removing the supernatant,
e) optionally dehydrating the surface thus coated,
f) rinsing the functionalised surface,
g) drying the functionalised surface.

12. Method according to claim 11, **characterized in that** said metal surface consists of over 50% of:
- noble metals selected from gold, platinum, silver and copper,
- oxidised metals selected from iron, titanium, aluminium, ruby, sapphire, nickel, ruthenium, rhodium and tin,
- alloys selected from steel, stainless steel, brass, nickel-silver, bronze, tin-nickel, nickel-phosphorus, copper-beryllium, palladium-nickel, copper-cobalt, or alloys comprising vanadium, chromium, manganese, zinc, tungsten, or zirconium, or another amorphous alloy, or
- ceramics, or
- semi-conductors such as silicon or germanium as well as oxides thereof, or even diamond.

13. Use of a functionalised surface obtained according to the method defined in claims 11 and 12 for the manufacture of bottles and/or stoppers intended for the pharmaceutical, cosmetics or perfume industries, or in the luxury goods industry, in parts used in micromechanics or microelectronics.
